# EUROPÄISCHE PATENTSCHRIFT

(11) **EP 3 877 150 B1**
(45) Veröffentlichungstag und Bekanntmachung des Hinweises auf die Patenterteilung: **23.10.2024**
(21) Anmeldenummer: 19801320.3
(22) Anmeldetag: 08.11.2019
(51) Int. Cl.: B29C 64/118, B29C 64/209, B33Y 10/00, B33Y 30/00, B29C 70/38

(54) **DRUCKKOPF FÜR DIE ADDITIVE FERTIGUNG VON FASERVERBUNDWERKSTOFFEN**
PRINT HEAD FOR THE ADDITIVE PRODUCTION OF FIBRE COMPOSITE MATERIALS
TÊTE D'IMPRESSION POUR LA FABRICATION ADDITIVE DE MATÉRIAUX COMPOSITES RENFORCÉS PAR DES FIBRES

(30) Priorität: 08.11.2018 DE 102018127934; 27.06.2019 DE 102019117341
(43) Veröffentlichungstag der Anmeldung: 15.09.2021
(73) Patentinhaber: Technische Universität Berlin, 10623 Berlin (DE)
(72) Erfinder: CZASNY, Mathias, 10715 Berlin (DE); GURLO, Aleksander, 14089 Berlin (DE); GÖRKE, Oliver, 10623 Berlin (DE); SCHMIDT, Franziska, 10623 Berlin (DE)
(74) Vertreter: Hertin und Partner Rechts- und Patentanwälte PartG mbB
(86) Internationale Anmeldenummer: PCT/EP2019/080646
(87) Internationale Veröffentlichungsnummer: WO 2020/094829

(56) Entgegenhaltungen:
- EP-A2- 3 141 378
- WO-A1-2018/189062
- WO-A2-2014/153535

## Beschreibung

Die Erfindung betrifft in einem ersten Aspekt einen Druckkopf zur additiven Fertigung eines Faserverbundwerkstoffes umfassend eine Faserverstärkung in einer Polymermatrix, umfassend eine Infiltrationseinheit für eine Mischung und/oder Infiltration eines Faserrovings mit einem geschmolzenen Polymer; mindestens eine Zuführung für ein Polymer und/oder ein Faserroving zur Infiltrationseinheit; ein Heizelement zum zumindest teilweisen Schmelzen des Polymers innerhalb der Infiltrationseinheit; mindestens ein Umlenkelement innerhalb der Infiltrationseinheit sowie eine Abführung für den entstandenen Faserverbundwerkstoff aus der Infiltrationseinheit, wobei das geschmolzene Polymer und der Faserroving innerhalb der Infiltrationseinheit entlang eines Kanals zwischen Zuführung und Abführung leitbar sind und der Faserroving innerhalb des Kanals durch das Umlenkelement bereichsweise quer und/oder schräg zu einer geradlinigen Führung zwischen Zuführung und Abführung umlenkbar ist, wobei die Infiltrationseinheit mindesten einen Materialüberlauf für das Polymer aufweist.

In einem weiteren Aspekt betrifft die Erfindung die Verwendung des genannten Druckkopfs zur additiven Fertigung sowie ein Verfahren zur additiven Fertigung unter Verwendung des genannten Druckkopfs. Die Offenbarung beschreibt weiterhin einen durch den Druckkopf hergestellten Faserverbundwerkstoff.

### Hintergrund und Stand der Technik

Die vorgeschlagene Erfindung gehört in den Bereich der Additive Fertigungsverfahren und ist dort speziell der Technik der Materialextrusion (engl.: *Fused Deposition Modelling-FDM* bzw, *Fused Filament Fabrication FFF*) zuzuordnen. Bei diesem Verfahren werden kontinuierlich Bahnen abgelegt, bestehend aus aufgeschmolzenen Thermoplasten, Keramische Massen oder anderen Werkstoffen, in dem das Material durch eine Düse gepresst wird. Diese Bahnen werden schichtweise abgelegt, je nach vorgegebener äußerer Kontur und innerem Aufbau, wodurch das dreidimensionale Objekt aufgebaut wird. Druckköpfe für additive Fertigungsverfahren gemäss dem Oberbegriff des Anspruchs 1 sind bekannt aus WO2014/153535A2.

Aktuell sind verschiedene Werkstoffe als *Feedstock* bzw. Ausgangsmaterial kommerziell erhältlich, wobei im Bereich thermoplastischer Polymere die Festigkeiten sehr gering sind. Um höhere mechanische Eigenschaften zu erreichen, vergleichbar mit denen von Metallen, kann als innovative Lösung eine endlose bzw. kontinuierliche Faserverstärkung eingearbeitet werden. Hierbei handelt es sich dann um einen Verbundwerkstoff aus Verstärkungsfasern und einem Matrixmaterial, das die Kräfte zwischen den Fasern übertragen kann. Endlos bzw. kontinuierlich bedeutet hier, dass die Fasern nicht geschnitten werden und somit mindestens eine Dimension des Bauteils entsprechend lang sein sollte, bzw. als lokale Verstärkung mehr als 10 mm Länge aufweisen sollten. Es ist bekannt, die Herstellung eines Filaments (Feedstock/Draht der in die Düse gepresst wird) mit bereits eingearbeiteten endlosen Fasern zu verwenden. Dieses faserverstärkte Filament als Ausgangsmaterial wird anschließend in einem eigentlichen Druckprozess verarbeitet/verdruckt.

Dabei wird im Stand der Technik das verstärkte, infiltrierte Material in der Düse des Druckers aufgeheizt und durch eine abgerundete Düse abgelegt. Großer Nachteil des Verfahrens ist, dass nur Materialien mit der Spezifikation vom verwendeten Drucker als Ausgangsmaterial in Frage kommen. Es besteht also keinerlei Flexibilität in der Auswahl und Kombination von Matrix und Faserverstärkung. Üblicherweise werden sehr kleine Garnstärken der Fasern verwendet, was sehr hohe Druckzeiten für große Objekte zur Folge hat. Für andere Garnstärken werden andere Druckköpfe benötigt, wobei bei dickeren Fasern das Aufwickeln als Filament zur einfachen Lagerung und/oder Zuführung zum Drucker nicht mehr möglich ist. Der Grund hierfür sind die hohen Biegesteifigkeiten insbesondere der Faser in der Matrix, die zu großen Wickelradien führen. Zudem ist es nur möglich einen Thermoplast als Matrixmaterial zu verwenden z.B. Nylon bei Anbietern des Standes der Technik. Dieses Matrixmaterial hat aber für viele Anwendungen Nachteile, wie die stark schwankenden mechanischen Eigenschaften aufgrund unterschiedlicher Feuchtigkeitsgehalte beispielsweise. Auch kann der Matrixgehalt nicht variiert werden, da diese konstant bei der Produktion der verstärkten Filamente eingestellt werden muss.

Auch ist es im Stand der Technik üblich, dass das Matrixmaterial die Fasern nur umhüllt bzw. ummantelt und das Fasermaterial nicht in die Faser selber bzw. zwischen die Fasern bei Verwendung eines Faserbündels bzw. -rovings eindringt. Daher können Kräfte zwischen den Fasern bzw. zwischen Faser und Matrix nicht in einem wünschenswerten Maße übertragen werden.

Es wäre daher wünschenswert, einen Faserverbundwerkstoff zu Verdrucken bzw. bereitzustellen, der eine höhere Flexibilität in Auswahl und Kombination von Faser und Matrix ermöglicht. Außerdem wäre eine bessere Anbindung zwischen den Fasern bzw. zwischen Faser (-bündel) und Matrix wünschenswert, um die Stabilität zu erhöhen. Durch eine verbesserte Infiltration wird außerdem der Porenanteil im Verbund verringert und die mechanische Festigkeit des Verbundes gesteigert.

### Aufgabe der Erfindung

Aufgabe der Erfindung ist es, einen Druckkopf, einen Faserverbundwerkstoff sowie ein Verfahren ohne die Nachteile des Standes bereitzustellen. Insbesondere war es eine Aufgabe der Erfindung, einen Druckkopf, einen Faserverbundwerkstoff sowie ein Verfahren bereitzustellen, in dem ein Faserverbundwerkstoff einfach hergestellt und flexibel angepasst werden kann, wobei eine höhere Stabilität des zu verdruckenden Materials erreicht werden kann und eine einfache und kostengünstige Bereitstellung der Ausgangsmaterialien erreicht werden kann.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung einen Druckkopf zur additiven Fertigung eines Faserverbundwerkstoffes gemäss Anspruch 1.

In einem zweiten Aspekt betrifft die Erfindung eine Verwendung des genannten Druckkopfes gemäss Anspruch 13. In einem dritten Aspekt betrifft die Erfindung ein Verfahren gemäss Anspruch 14.

Die folgenden Definitionen, Ausführungsformen und Vorteile können sowohl in einer für den Fachmann offensichtlichen Weise sowohl auf den ersten, zweiten Aspekt als auch auf den dritten Aspekt bezogen sein.

Durch einen solchen Druckkopf kann die Herstellung des Verbundes mit einer thermoplastischen Schmelze und "trockenen" Fasern (Fasern ohne Matrixmaterial, sehr flexibel) direkt im Druckkopf. der Düse vorgelagert, während eines Druckprozesses vorgenommen werden. Dabei werden das Polymer für die Matrix zur Einbettung der Faser und die Faserverstärkung dem Druckkopf einzeln zugefügt und dort in der Infiltrationseinheit gemischt. Um eine bessere Verbindung zwischen Faser und Matrix zu erhalten, wird die Faser innerhalb der Einheit bzw. dem Mischungsvolumen vorzugsweise mehrfach umgelenkt und so auch quer zur Strömungsrichtung des Polymers und/oder zu einer geradlinigen Führung zwischen Zuführung der Fasern und Abführung des entstandenen Verbundmaterials geführt und durch die Umlenkung senkrecht zu den Fasern ein Druckfeld aufgebaut, wobei die Faser aufgeweitet wird. So kann mehr Polymermatrix in die Faser bzw. in Zwischenräume zwischen mehreren Fasern eines Bündels verbessert eindringen, wodurch hinterher bei einer Trocknung und/oder Abkühlung die Verbindung zwischen Faser und Matrix deutlich verstärkt wird.

Ein Druckkopf zur additiven Fertigung ist vorzugsweise ein wesentlicher Bestandteil eines landläufig sogenannten 3D-Druckers. 3D-Druck wir bevorzugt auch als additive Fertigung bezeichnet. Hierbei ist insbesondere das sogenannte *Fused Deposition Modeling* (*FDM;* zu Deutsch auch Schmelzschichtung) oder *Fused Filament Fabrication* (*FFF*) gemeint. Hiermit ist vor allem ein Fertigungsverfahren gemeint, bei dem ein Werkstück schichtweise aus einem schmelzfähigen Kunststoff gefertigt wird. Diese Art des 3D-Drucks kann insbesondere beim *Rapid Prototyping* verwendet werden. Verdruckt werden soll dabei vor allem ein Faserverbundwerkstoff umfassend eine Faserverstärkung in einer Polymermatrix. Eine Polymermatrix wird bevorzugt auch als Kunststoffmatrix bezeichnet.

Ein Faserverbundwerkstoff ist dem Fachmann bekannt und umfasst bevorzugt Verstärkungsfasern aus Fasern, z. B. Kohlenstofffaser und einer Polymer- bzw. Kunststoffmatrix, welche die Fasern bettet. Mit Kunststoffmatrix und/oder Polymermatrix ist vorteilhafterweise ein Werkstoff gemeint, welcher Polymere umfasst und in dem die Fasern eingebettet werden. Da die Fasern vorteilhafterweise eine höhere Steifigkeit als die Matrix aufweisen, wird einwirkende Last bzw. Kraft bevorzugt entlang der Fasern geleitet, wodurch sich die Gesamtstabilität des Faserverbundwerkstoffes vorzugsweise erhöht.

Eine Faser ist insbesondere ein lineares, längliches Gebilde, das aus einem Faserstoff besteht und eine Faserform aufweist, wobei die Längsform z. B. glatt oder kraus und die Querschnittsform beispielsweise rund oder eckig ist. Mit Fasern sind vor allem dünne Fäden von bevorzugt einigen Mikrometern Durchmesser bezeichnet. Aber auch dickere und/oder dünnere Fasern sind bekannt und können zum Einsatz kommen. Ein Faserroving oder nur Roving besteht bevorzugt aus mehreren Fasern und bildet daher ein Faserbündel aus. In technischen Anwendungen kommen dabei häufig nur Faserrovings vor um die Handhabbarkeit zu erhöhen. Des Weiteren können Fasern auch bevorzugt als Garn vorliegen, hierbei sind Fasern unterschiedlicher Länge insbesondere miteinander verzwirbelt oder verflochten.

Der Kunststoff kann bevorzugt ein thermoplastisches, ein duroplastisches und/oder ein elastomeres Material umfassen. Thermoplasten sind leicht zu verarbeiten. Duroplasten sind bevorzugt auch unter hohen Temperaturen besonders stabil und können vor allem unter Wärmeeinwirkung nicht verformt werden. Elastomere weisen insbesondere eine hohe Umwandlungsfähigkeit auf und besitzen eine höhere Energieadsorption.

Der Kunststoff bzw. das Polymer kann z. B. aus Harz und/oder Härter bestehen. Es können sowohl Kondensationsharze als auch Reaktionsharze verwendet werden, die im Unterschied zu ersteren in der Hauptsache ohne Abspaltung flüchtiger Komponenten, allein durch Polymerisation oder Polyaddition aushärten. Dadurch kann vorteilhafterweis eine Schädigung der Gesundheit von bei der Herstellung beteiligter Personen vermieden werden.

Unter Härter sind bevorzugt Materialien zu verstehen, die insbesondere gemeinsam mit dem verwendeten Harz zu einer Aushärtung zu einem festen Stoff, in erster Linie zu einem festen Kunststoff führen. Härter sind bevorzugt ausgewählt aus der Gruppe umfassend Polyamine, Aminaddukte, Polyaminoamide, Ketimine, Polyisocyanate, blockierte Isocyanate, Cyanguanidin, Amidine, Anhydride von Dicarbonsäuren, Carboxygruppen-haltige Polyesterharze, Dicarbonsäuren, Aldehyde, Ketone und/oder Divinylbenzole, Diallylphthalat und/oder Triglycidylisocyanurat.

Der Druckkopf bezeichnet bevorzugt einen wesentlichen Bestandteil des Druckers. Vorzugsweise findet zwischen Druckkopf und Druckfläche, auf der das Material verdruckt werden soll, eine Relativbewegung statt, durch deren horizontale (bzw. parallel zur Druckfläche) Bewegungsanteile eine Deponierung des zu verdruckenden Materials in der horizontalen Ebene der Druckfläche stattfindet. Vertikale Bewegungsanteile (bzw. senkrecht zur Druckfläche) steuern die Deponierung in der Höhe (senkrecht zur Druckfläche). Vorzugsweise umfasst der Druckkopf insbesondere einen Ausgabebereich, an dem das zu verdruckende Material entsprechend dem zu druckenden Werkstück auf die Druckfläche deponiert wird. Dies kann insbesondere eine Düse sein. Neben diesem Element kann der Druckkopf weitere Elemente umfassen, die für einen funktionierenden Druck dem Ausgabebereich unbedingt vorgelagert werden müssen.

Insbesondere umfasst der Druckkopf eine Infiltrationseinheit für eine Mischung und/oder Infiltration eines Faserrovings mit einem geschmolzenen Polymer. Ein Faserroving bezeichnet vorzugsweise ein Bündel von Fasern. Bevorzugt können in den Faserverstärkungen einzelne, feinste Fasern zu sogenannten Rovings zusammengefasst werden. Ein Faserroving ist bevorzugt ein Bündel, Strang und/oder Garn aus parallel angeordneten Fasern. Die Anzahl der zusammengefassten Fasern wird dabei insbesondere mit der Filamentzahl angegeben, welche bevorzugt direkt dieser Anzahl entspricht. Einheiten von Tausend Fasern werden dabei bevorzugt mit k abgekürzt, 50.000 Fasern in einem Roving entsprechen somit insbesondere 50 k. Beispielsweise können die Faserrovings eine Filamentzahl zwischen 1.000 und 50.000 und/oder eine Feinheit zwischen 30 und 3.500 tex oder zwischen 40 und 400 tex aufweisen. Die Feinheit wird bevorzugt in tex angegeben. *tex* entspricht insbesondere der Masse in Gramm pro tausend Meter Länge einer Faser bzw. eines Rovings.

Die Infiltrationseinheit wird vorzugsweise auch Mischungsvolumen genannt. In der Infiltrationseinheit werden insbesondere Faserroving und Polymer in einer Weise zusammengebracht, dass ein Faserverbundwerkstoff umfassend eine Faserverstärkung in einer Polymermatrix für das bevorzugte anschließende 3D-Drucken entsteht. Hierfür sollten bevorzugt Faserroving und Polymer gleichzeitig in der Infiltrationseinheit vorliegen, wobei das Polymer vorzugsweise im Wesentlichen oder teilweise geschmolzen vorliegt. Schmelzen bedeutet insbesondere einen Phasenübergang des festen Polymers in den flüssigen Aggregatzustand, vorzugsweise aufgrund Wärmezufuhr und/oder Druckerniedrigung. Das geschmolzene Polymer kann dabei vorzugsweise mehr oder weniger viskos bzw. zähflüssig sein.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. "Ähnlich" beschreibt bevorzugt Größen, die ungefähr gleich sind. "Teilweise" beschreibt bevorzugt zu mindestens 5 %, besonders bevorzugt zu mindestens 10 %, und insbesondere zu mindestens 20 %, in einigen Fällen zu mindestens 40 %.

Hierfür wird vor allem ein Heizelement in der Infiltrationseinheit verwendet. Ein Heizelement kann beispielsweise mindestens einen elektrischen Heizdraht umfassen. Das Heizelement kann vorzugsweise an eine Regelvorrichtung (z. B. Steuereinheit in Form einer integrierten Schaltung) angeschlossen sein, der die Temperatur des Heizelements steuert und so den gewünschten, geschmolzenen Zustand des Polymers sicherstellt. Zur Abfrage der Ist-Temperatur wird vorzugsweise ein Temperatursensor verwendet, der insbesondere mit Hilfe der Elektronik (z. B. Regelvorrichtung) das Heizelement regelt.

Der Druckkopf umfasst mindestens eine Zuführung für ein Polymer und/oder ein Faserroving zur Infiltrationseinheit, damit diese dort gemeinsam vorliegen. Die Zuführung kann im einfachsten Fall eine Öffnung umfassen, um einen Zugang für das jeweilige Material von einem Außen des Druckkopfes zum Mischungsvolumen zu ermöglichen. Vorzugsweise sind Mittel für eine kontrollierte Zuführung umfasst, so dass immer Faserroving und/oder Polymer in gewünschter Menge vorliegen. Dies kann z. B. motorbetrieben kontrolliert werden, wobei die Zuführung, z.B. der Motor durch eine elektronische Regelung, insbesondere eine integrierte Schaltung gesteuert werden. Aber auch einfachere Mechanismen sind vorzugsweise umfasst. Dabei können sowohl Faserroving und Polymer über die gleiche Zuführung zugeführt werden. Vorzugsweise ist für Polymer und Faserroving jeweils mindestens eine Zuführung umfasst.

Der Druckkopf umfasst weiterhin vorzugsweise eine Abführung der Infiltrationseinheit für den entstandenen Faserverbundwerkstoff. Die Abführung umfasst vorzugsweise mindestens eine Öffnung der Infiltrationseinheit, aus der das entstandene Material außerhalb der Infiltrationseinheit gelangen kann. Die Abführung kann direkt in einem Ausgabebereich des Druckkopfs, z. B. einer Düse münden. Der Abführung kann jedoch ebenso eine Weiterverarbeitung und/oder ein Weitertransport des entstandenen Werkstoffs folgen, bevor ein Ausgabebereich anschließt.

Vorzugsweise umfasst die Infiltrationseinheit zwischen Zuführung und Abführung einen Kanal. Bei einem Betrieb des Druckkopfes, insbesondere der Infiltrationseinheit werden vorzugsweise die zu mischenden Ausgangsmaterialien Polymer und/oder Faserroving innerhalb dieses Kanals von der Zuführung zur Abführung transportiert. Der Kanal kann dabei in einem einfachen Fall eine röhrenartige Aussparung (Volumen) innerhalb der Infiltrationseinheit sein, welche im Wesentlichen gerade von der Zuführung zur Abführung verläuft. Polymer und/oder Faserroving bewegen sich vorzugsweise entlang des Kanals in Richtung Abführung. Die Bewegung kann z. B. durch einen Antrieb an der Zuführung erzeugt werden, welche auf diese Materialien eine Kraft ausübt, welche für die Bewegung in diese Richtung verantwortlich ist. Bei dem Faserroving kann es sich vorzugsweise um eine motorbetriebene Rolle handeln. Das Polymer kann auch z. B. am Stück (z. B. Filament) in Form einer Schmelze und/oder als Granulat an der Zuführung zugeführt werden, wobei das Polymer am Stück bspw. ebenfalls durch mindestens eine motorbetriebene Rolle bzw. als Granulat durch eine motorbetriebene Schnecke zugeführt wird. Die so ausgeübte Kraft auf das jeweilige Material bewirkt vorzugsweise durch eine Weiterleitung der Kraft ebenso eine Bewegung innerhalb des Kanals. Vorzugsweise kann zur Unterstützung der Bewegung an der Abführung, insbesondere hinter der Abführung außerhalb der Infiltrationseinheit ein weiterer Antrieb vorliegen, um den entstandenen Faserverbundwerkstoff durch Ausübung einer Zugkraft zusätzlich aus der Infiltrationseinheit zu ziehen. Dies kann vorzugsweise durch eine Abzugseinheit realisiert werden.

Während innerhalb des Kanals das Faserroving unverändert in seiner textilartigen Struktur vorliegt und sich dementsprechend im Wesentlichen als Einheit bewegt, wird das Polymer vorzugsweise durch das Heizelement geschmolzen (zumindest teilweise), so dass dieses nun bevorzugt (zumindest teilweise) in flüssiger Form entlang des Kanals bewegt wird. So ergeben sich vorzugsweise unterschiedliche Fortbewegungsmodi dieser beiden Materialien. Während bspw. das Faserroving insbesondere im Wesentlichen lokalisiert innerhalb des Kanals geführt werden kann, füllt das geschmolzene Polymer im Wesentlichen das gesamte vom Kanal geformte Volumen entlang des Weges von der Zuführung zur Abführung aus. Die Strömungsrichtung des Polymers wird dabei vorzugsweise durch die Ausformung des Kanals und die Kräfte (Zug- und/oder Druckkraft) von der Zuführung zur Abführung vorgegeben. Es kann ebenso bevorzugt sein, dass das Polymer in der Infiltrationseinheit vorliegt, ohne eine wesentliche Fließgeschwindigkeit in eine Richtung aufzuweisen. Das Faserroving wiederum kann vorzugsweise in seiner Bewegung innerhalb des Kanals durch Führung und/oder Umlenkung kontrolliert werden. Zu diesem Zwecke ist vorzugsweise das mindestens eine Umlenkelement der Infiltrationseinheit umfasst. Dies liegt insbesondere zumindest teilweise innerhalb des Kanals vor. Das Umlenkelement kann in Form von mindestens einer Rolle und/oder einem zylinderförmigen Element so ausgestaltet sein, dass das Faserroving innerhalb des Kanals zumindest bereichsweise quer zur Polymerströmungsrichtung geführt und/oder bewegt wird. Zur Konkretisierung der Bedeutung des Wortes "quer" in diesem Kontext ist dabei bevorzugt, dass die Bewegung des Polymers und/oder des Faserrovings von der Zuführung zur Abführung anhand eines dreidimensionalen Geschwindigkeitsvektors beurteilt wird, welcher bevorzugt durch drei zueinander orthogonale Vektorkomponenten in drei Raumrichtungen beschrieben werden kann. Die Richtung der Komponenten kann dabei vorzugsweise beliebig gewählt werden. Quer bedeutet nun vorzugsweise, dass die Bewegung/Geschwindigkeit des Faserrovings mindestens durch eine Vektorkomponente senkrecht zum Geschwindigkeitsvektor des bevorzugt strömenden Polymers beschrieben werden kann, welche sich vorzugsweise deutlich von einer Geschwindigkeit ,0' unterscheidet. Die Geschwindigkeit kann z. B. durch die Einheit Meter pro Sekunde (m/s) beschrieben werden. Der Geschwindigkeitsvektor des Polymers, kann dabei z. B. durch einen Mittelwert beschrieben werden. Dieser Geschwindigkeitsvektor wird vorzugsweise Polymerströmungsrichtung genannt. Auch wenn einzelne Moleküle oder Bereiche des geschmolzenen Polymers in ihrer Bewegung durch voneinander unterschiedliche Geschwindigkeitsvektoren beschrieben werden kann, können die verschiedenen Vektoren vorzugsweise gemittelt werden, wobei die Polymerströmungsrichtung vorzugsweise durch diesen Mittelwert bestimmt wird. Diese Polymerströmungsrichtung ist bevorzugt im Wesentlichen oder zumindest teilweise parallel und/oder identisch zu einer geraden Verbindung von der Zuführung zur Abführung. Dass das Faserroving innerhalb des Kanals durch Umlenkung um das Umlenkelement bereichsweise quer zur Polymerströmungsrichtung von der Zuführung zur Abführung führbar ist bedeutet insbesondere, dass das geschmolzene Polymer zumindest in Bereichen innerhalb des Kanals vom Polymer durchströmt wird. Dabei weist das Faserroving in seiner Bewegung zumindest eine Vektorkomponente senkrecht zur Polymerströmung auf, so dass die Polymerströmung auf einer Querseite des Rovings auftrifft und dabei durch die vom Roving gebildeten Zwischenräume hindurchfließt und auf der anderen Querseite des Rovings dieses wieder verlässt. Hierdurch wird das Roving vorteilhafterweise umfangreich vom geschmolzenen Polymer benetzt bzw. infiltriert und kann dadurch einen verbesserten Faserverbundwerkstoff bilden. Das mindestens eine Umlenkelement ist vorzugsweise so ausgestaltet und/oder angeordnet, dass das Faserroving von der Zuführung zur Abführung nicht auf einer geraden Linie bewegt werden kann, sondern eine Ablenkung quer zu einer solchen Verbindung erhält. Das geschmolzene Polymer kann zwar ebenso in einigen Bereichen durch das Umlenkelement in seiner bevorzugt geradlinigen Bewegung zwischen Zuführung und Abführung beeinflusst werden, jedoch ist aufgrund des vorzugsweise flüssigen Charakters ein solcher eventueller Einfluss weniger stark ausgeprägt, so das weiterhin eine gemittelte Bewegung resultiert, zu der die Bewegung des Faserrovings zumindest bereichsweise quer verläuft.

Dass das Polymer und/oder Faserroving innerhalb der Infiltrationseinheit entlang eines Kanals zwischen Zuführung und Abführung leitbar sind, bedeutet insbesondere, dass die Infiltrationseinheit dafür gestaltet ist, dass Polymer und/oder Faserroving dort vorliegen und einander infiltrieren können, so dass ein entsprechender Verbundwerkstoff die Abführung verlassen kann. Leitbar bedeutet bevorzugt ebenfalls, dass das Faserroving von der Zuführung zur Abführung entlang des Kanals (um die Umlenkelemente) bewegt werden kann. Das Polymer, kann, aber muss nicht fließen, es kann auch bevorzugt nur bevorzugt im Wesentlichen homogen und vorzugsweise ohne Luftblasen in der Infiltrationseinheit vorliegen.

Es kann ebenso bevorzugt sein, dass das Polymer im Wesentlichen nicht oder nur wenig fließt und/oder strömt. Dabei kann es sogar eine Geschwindigkeitskomponente aufweisen, welche von der Abführung hinfort zeigt, z. B. in Richtung eines Überlaufs. Wesentlich ist insbesondere, dass das Faserroving durch das mindestens eine Umlenkelement eine Geschwindigkeitskomponente (bevorzugt relativ zum Polymer) aufweist, welche bereichsweise quer und/oder schräg zu einer geradlinigen Führung zwischen Zuführung und Abführung verläuft. Es wird jedoch vorzugsweise immer ein kleiner Anteil des Polymers durch das Faserroving zur Abführung bewegt, um den Faserverbundwerkstoff zu bilden

So kann nicht nur der Kontakt zwischen Polymer und Faserroving vergrößert werden, es kann ebenso ein Druckfeld vom Polymer und/oder dem Umlenkelement auf das Faserroving ausgeübt werden bei bevorzugter gleichzeitiger Aufweitung des Faserrovings, womit die Infiltration des Polymers in das Faserroving verbessert wird.

Bevorzugt gilt, dass die Geschwindigkeit des Faserrovings in etwa so groß ist wie die Verfahrgeschwindigkeit des Druckkopfes, da die Fasern vorzugsweise nicht flexibel sind. Z. B. kann mit einer Geschwindigkeit von etwa 5mm/ s, entsprechend 300 mm /min gearbeitet werden. Typisch im 3D Druck sind bevorzugt Geschwindigkeiten in einem Bereich von etwa 30-60mm/s, jedoch sind vorzugsweise auch 60-120mm/s möglich. Jedoch gibt es vorzugsweise einen Tradeoff zwischen Geschwindigkeit und Bauteilqualität des geruckten Bauteils, welches insbesondere auch von der Qualität des Druckers abhängt. Die Geschwindigkeit des Polymerstroms ist vorzugsweise vergleichsweise gering und vor allem abhängig vom Querschnitt der Kammer. Bei einem kleiner werdenden Querschnitt steigt die Geschwindigkeit vorzugsweise an, wodurch sich bevorzugt auch die Viskosität aufgrund einer höheren Scherrate sich ändert. Da das Polymer vorzugsweise durch die Infiltration des Rovings abgezogen wird, ist die Fließgeschwindigkeit nahe dem Einlass vorzugsweise höher, als z.B. am Auslas. Am Auslass ist eine möglichst niedrige Fließgeschwindigkeit bevorzugt, damit nicht zu viel Polymer ausgestoßen wird. Dabei beschreibt die Fließgeschwindigkeit multipliziert mit dem Querschnitt vorzugsweise den Volumenstrom. Jedoch ist es vorteilhaft, dass das Polymer fließt, da somit insbesondere die Kammer immer vollständig gefüllt ist. So können z. B. Luftblasen vermieden und nicht im Roving eingearbeitet werden (felende Matrix = schlechtere mechanische Eigenschaften). Ebenso wird vorzugsweise nicht ganz frisches Polymer Stück für Stück aus dem Druckkopf ausgestoßen. Dies ist bevorzugt, da hohe Temperaturen beispielsweise zu einer Zerstörung des Polymers führen können (Abhängig vom verwendeten Polymer und der Drucktemperatur).

Durch diese Technik sind dickere Faserbündel, unterschiedliche Matrixwerkstoffe und unterschiedliche Matrixanteile mit einem Druckkopf verwendbar bzw. herstellbar. Die Fasern bzw. das Faserroving wird nicht nur ummantelt, sondern das Matrixmaterial dringt in die Faser/das Roving (insbesondere in die Zwischenräume) ein. Dies ist essentiell, um Kräfte zwischen den Fasern übertragen zu können und damit stark verbesserte mechanische Eigenschaften, vorteilhafterweise ähnlich zu denen eines Metalls zu ermöglichen.

Dabei wir die Infiltration vor allem durch das Aufweiten des Faserstranges und/oder das Einpressen des Polymers durch ein Druckfeld begünstigt. Die Durchströmung im Kanal ist von wichtiger Bedeutung für das Bereitstellen der Matrix, insbesondere hat die Durchströmung jedoch Einfluss auf die Infiltration.

Tabelle 1 fasst einige Vorteile des Druckkopfes gegenüber dem Stand der Technik zusammen.

**Tabelle 1: Vergleich der Drucktechnologien des Standes der Technik mit dem hier beschriebenen innovativen Ansatz**

| **Verfahren:** | **Druckkopf für vorproduzierte Endlosfaserverstärkte Filamente** | **Innovativer Druckkopf: Vermischung Thermoplast und Faserbündel in der Infiltrationskammer** |
|---|---|---|
| Möglichkeit der Infiltration im Druckkopf | Nein | Ja |
| Verschiedene Garnstärken möglich? | nur eine Stärke pro Druckkopf möglich | Verschiedene Garnstärken sind möglich, bei gleichem Druckkopf |
| Große Garnstärken? | Nein, nur kleine Garnstärken könne als Filament aufgerollt werden | Ja, große Garnstärken möglich, da "trockene" Faser gut aufrollbar sind. |
| Anzahl Matrixmaterial? | Nur ein Matrixmaterial pro hergestelltem Filament | Mehrere Matrixmaterialen können in Druckkopf zugeführt werden, lokale unterschiedliche Matrizes möglich |
| Gradierung? | Nein, nicht möglich | Ja, möglich |
| Grundmaterial Matrix | In Filamentherstellung vorgegeben | Verwendung von Filamenten, Granulaten oder direkt von einer anders hergestellten Polymerschmelze |
| Matrixanteil im Bauteil? | Konstant | Veränderbar |
| Druckzeit für große Bauteile: | Lange Druckzeit, auf Grund kleiner Garnstärke und vorgeschriebenem Matrixanteil | Druckzeit einstellbar, größere Garnstärken möglich und Matrixanteil veränderbar. |
| Mechanische Eigenschaften? | Aufgrund einer unvollkommenen Verbindung zwischen Matrix und Faser eher schlecht bis durchschnittlich | Aufgrund der Verbesserung der Anbindung der Fasern an fas Matrixmaterial sehr gute mechanische Eigenschaften |

Die entwickelte Idee bietet in allen Bereichen wie Luft und Raumfahrt, Automotiv, Medizintechnik, Allgemeiner- und Sondermaschinenbau Anwendungen. Immer wenn es um niedrige Stückzahlen geht (<10-100) und im Besten Fall Stückzahl 1 kann die Additive Fertigung ihren Kostenvorteil im Vergleich zu anderen Technologien erbringen. Durch die Verwendung von Endloskohlenstofffaserverstärkung können neue Designmöglichkeiten im Bereich Leichtbau ermöglicht werden. Durch die bevorzugte digitale Fertigung und Automatisierung bietet der Einsatz des eigens erforschten Druckkopfes große Vorteile im Vergleich zu Technologien mit hohem Personaleinsatz (Handwerk) oder der Datenverarbeitung (Industrie 4.0, BigData).

Die beste Verwendung ist bevorzugt im Bereich der Medizintechnik bei der Fertigung von Prothesenschäfte und Orthesenbauteilen zu sehen. Bei Prothesen (Körperteil muss bevorzugt ersetzt werden) kann z.B. die Stumpfform mittels Scan abgenommen werden und das Bauteil am Computer modelliert werden. Ein anschließendes Ausdrucken bzw. Verstärkten mit dem Endlosfaserverbund ermöglicht eine digitale Fertigung, die so aktuell noch nicht einsatzfähig ist. Gleiches gilt für Orthesen, bei den ein Körperteil bevorzugt unterstützt werden muss. Durch die patientenspezifische Individualisierung müssen die Bauteile immer in Stückzahl 1 produziert werden, da sich der Patient auch innerhalb von Zeiträumen von 1-3 Jahren verändert. Anderseits können Produktionslinien aufgebaut werden, die sich einen bestimmten Typ von Prothesenschaft z.B. für den Oberschenkel optimiert werden und es können mehrere 1000 Schäfte mit leicht unterschiedlicher Geometrie gefertigt werden. Somit wäre eine wirtschaftliche, automatisierte Fertigung von Bauteilen in Stückzahl 1 möglich. Dies ist mit keinem anderen Verfahren derzeit möglich.

Die vorgestellte Erfindung ermöglicht vorteilhafterweise die Infiltration des Kohlenstofffaserrovings. Hierzu wird das Faserbündel bevorzugt über Stifte oder abgerundete Ecken geführt und somit insbesondere die Polymerschmelze durch ein Druckfeld in den Faserstrang eingepresst. Dies wird vorteilhafterweise des Weiteren durch das Aufweiten des Stranges zusätzlich erleichtert. Im Vergleich zu der bestehenden Technologie der vorinfiltrierten Endlosfaser-verstärkten Filamente, können vorteilhafterweise bei der vorgestellten Druckkopftechnologie dickere Faserrovings verwendet werden, da die minimalen Biegeradien kleiner sind, als im Verbund. Außerdem kann lokal der Faservolumengehalt variiert bzw. einfach verschiedene Matrixwerkstoffe verwendet werden.

Anwendungsmöglichkeiten bestehen insbesondere in der Luft- und Raumfahrt, Automobilindustrie, Medizintechnik (Pro und Orthesenherstellung), Maschinenbau.

In einer bevorzugten Ausführungsform der Erfindung ist das geschmolzene Polymer innerhalb der Infiltrationseinheit mit einer Polymerströmungsrichtung von der Zuführung zur Abführung entlang eines Kanals zwischen Zuführung und Abführung leitbar und das Faserroving innerhalb des Kanals durch Umlenkung um das Umlenkelement bereichsweise quer zur Polymerströmungsrichtung von der Zuführung zur Abführung führbar.

So kann eine Infiltration besonders effektiv gestaltet werden.

In einer bevorzugten Ausführungsform der Erfindung ist eine Düse zur kontrollierten Ablage des Faserverbundwerkstoffes auf einer Druckfläche umfasst, wobei sich die Düse an der Abführung befindet. Eine Düse umfasst bevorzugt einen Richtung Druckfläche sich verengenden Querschnitt einer Öffnung für das zu verdruckende Material. Insbesondere umfasst eine Düse einen sich verengenden Austrittsquerschnitt für den zu verdruckenden Faserverbundwerkstoff. Auf diese Weise kann ein besonders kompakter Druckkopf bereitgestellt werden. Eine Düse als Abgabebereich, welche zum Verdrucken an eine Druckfläche angenähert wird bzw. sich dort befindet, hat sich zum FMD/FFF Drucken als besonders geeignet herausgestellt.

In einer weiteren bevorzugten Ausführungsform der Erfindung ist eine Düse zur kontrollierten Ablage des Faserverbundwerkstoffes auf einer Druckfläche umfasst, wobei sich die Düse an der Abführung befindet und wobei Düse und Druckfläche vorzugsweise konfiguriert sind für eine Relativbewegung zwischen Düse und Druckfläche, insbesondere in alle Raumrichtungen und/oder mit allen möglichen Freiheitsgraden. Eine Relativbewegung kann dabei vorzugsweise sowohl durch Bewegung der Düse als auch durch Bewegung der Druckfläche und insbesondere durch Bewegung beider Elemente zueinander erzielt werden. Die möglichen Freiheitsgrade umfassen dabei bevorzugt neben translatorischen Freiheitsgraden ebenso rotatorische bzw. rotationelle Freiheitsgrade. Hierdurch kann ein Verdrucken komplexer, dreidimensionaler Bauteile ermöglicht werden.

In einer weiteren bevorzugten Ausführungsform der Erfindung umfasst der Druckkopf mindestens zwei, bevorzugt mindestens drei, stärker bevorzugt mindestens vier und insbesondere mindestens fünf Umlenkelemente. Dadurch kann das Faserroving mehrmals und/oder in verschiedene Richtungen abgelenkt/umgelenkt werden und eine Vernetzung mit dem Polymer kann verbessert werden. Bei mehreren Umlenkelementen ist insbesondere bevorzugt, dass die Umlenkelemente entlang des Kanals auf gegenüberliegenden Seiten angeordnet sind. So kann eine besonders effektive Umlenkung in wechselseitige Richtung vorgenommen werden.

In einer weiteren bevorzugten Ausführungsform der Erfindung sind 2 - 8 Umlenkelemente, insbesondere 5 Umlenkelemente umfasst. Diese Zahl an Umlenkelementen hat sich als besonders effektiv herausgestellt, gleichzeitig kann der Aufbau des Druckkopfes einfach gehalten werden. Insbesondere 5 Umlenkelemente sorgen für eine hervorragende Infiltration und gleichzeitig für eine kompakt gehaltene Infiltrationskammer.

In einer weiteren bevorzugten Ausführungsform der Erfindung ist jeweils mindestens eine Zuführung für das Polymer und das Faserroving umfasst ist. Durch eine einzelne Zuführung für jedes Ausgangsmaterial kann die Zuführung besonders gut an das jeweilige Material angepasst und somit verbessert werden.

In einer weiteren bevorzugten Ausführungsform der Erfindung ist die Anordnung und/oder eine radiale Ausdehnung des Umlenkelements konfiguriert für die Umlenkung des Faserrovings um das Umlenkelement, eine Geschwindigkeitsänderung des Faserrovings, eine Aufweitung des Faserrovings und/oder die Führung des Faserrovings quer und/oder schräg zur Polymerströmungsrichtung und/oder zur geradlinigen Führung zwischen Zuführung und Abführung. Durch das Umlenkelement wird insbesondere eine Umlenkung des Faserrovings von einem direkten Weg zwischen Zuführung und Abführung erreicht, welcher sich ergeben würde, wenn das Umlenkelement nicht umfasst wäre. Zur Umlenkung wird vorzugsweise eine Kraft auf das Faserroving senkrecht zur Längsachse des Rovings und/oder senkrecht zu einem direkten Weg zwischen Zuführung und Abführung erreicht. Dadurch wird nicht nur eine Umlenkung des Faserbündels erreicht, sondern es kann auch zusätzliche eine Aufweitung des Faserrovings erzielt werden, so dass Zwischenräume zwischen den einzelnen Fasern des Bündels entstehen bzw. sich vergrößern und durch das Polymer besser erreicht werden können. Durch die Umlenkung und die seitlich auf das Roving wirkenden Kräfte wird vorzugsweise der im Wesentlichen runde Querschnitt des Bündels in Richtung elliptischen Querschnitt geändert und eine Aufweitung des Bündels erreicht. Durch die Umlenkung wird vorzugsweise eine Geschwindigkeitsänderung erreicht. Dies geschieht bevorzugt zum einen dadurch, dass sich die Richtung der Bewegung ändert, womit bevorzugt bereits eine Änderung der Geschwindigkeit des Faserrovings umfasst ist. Des Weiteren ergibt sich durch die Umlenkung/Führung durch die Umlenkelemente auch eine Verlangsamung des Faserbündels, vorzugsweise durch Reibungskräfte zwischen Umlenkelement und Faserbündel. Durch diese Reibungskräfte wird vorzugsweise auch eine Aufweitung des Faserrovings erzielt, weil diese Kräfte entgegen der gebündelten Anordnung des Rovings ohne Zwischenräume wirken. Vorzugsweise wirkt das Umlenkelement wie ein Führungselement für den Faserroving, so dass bevorzugt der Roving geführt wird. Mit Führen ist vorzugsweise gemeint, dass die Geschwindigkeit und/oder Bewegungsrichtung des Rovings kontrolliert werden kann. Durch solche Umlenkelemente kann eine verbessere Infiltration und Anbindung zwischen Polymermatrix und Faserbündel erreicht werden.

Dabei erfolgt bevorzugt die Infiltration als erster Schritt vor der Anbindung, um überhaupt ein Anhaften des Polymers an der Faser zu ermöglichen. Dies ist bevorzugt wesentlich für die grundsätzliche Definition eines Verbundes, da so die Fasern vollständig in der Matrix eingebettet sind. Die Anbindung wird bevorzugt auf die physikalische und/oder chemische Anbindung bezogen. Wenn Faser und Matrix "abstoßend" sind (bevorzugt unpolare und polare Oberflächenspanngen) dann könnte trotz einer Infiltration bevorzugt keine oder nur geringe Kräfte übertragen werden, die Anbindung ist vorzugsweise schlecht.

Die Stiftumlenkung unterstützt vor allem die Infiltration und unterstützt bevorzugt nicht die physikalische und/oder chemische Anbindung, ermöglicht diese jedoch vorzugsweise überhaupt erst, da ohne Matrix zwischen den Fasern auch keine Anbindung stattfinden kann.

Vernetzung zwischen Polymeren können vorzugsweise nur stattfinden, wenn aktive Gruppen vorhanden sind, wie z.B. bei den Duromeren (Epoxidharz, Polyesterharz) oder bei bestimmten Additiven. Die Umlenkung mit den Stiften sorgt vor allem dafür, dass das Polymer überhaupt in die Matrix eingearbeitet werden kann.

In einer weiteren bevorzugten Ausführungsform der Erfindung ist das Umlenkelement mindestens bereichsweise zylinderförmig und weist eine axiale Anordnung senkrecht zur Polymerströmungsrichtung und/oder zur geradlinigen Führung zwischen Zuführung und Abführung innerhalb des Kanals auf. Zylinderförmige Elemente haben sich als besonders geeignete Umlenkelemente erwiesen, weil Sie durch die runde Mantelfläche, welche zumindest bereichsweise die Umlenkung bewirkt, eine besonders "sanfte" Umlenkkraft ausüben, welche die Integrität des Faserbündels nicht beeinträchtigt. Wären eckige und/oder spitze Bereiche für die Umlenkung vorgesehen, könnten diese leicht für einen Bruch oder Schnitt des Faserbündels sorgen. Das zylinderförmige Umlenkelement ist vorzugsweise so angeordnet, dass das Faserbündel auf dem Weg von der Zuführung (des Faserbündels) zur Abführung eine Ablenkung erfährt, indem die Mantelfäche des Zylinders zumindest bereichsweise in den Weg hineinragt und das Faserbündel mit dieser Mantelfläche bereichsweise in Kontakt kommt. Dabei bewegt sich das Roving vorzugsweise in Längsrichtung über einen Teil des Zylinderumfangs und fährt diesen Teil des Umfangs bei seiner Bewegung nach. Das Umlenkelement muss bevorzugt keine vollständige ausgeführte Zylinderform haben, sondern kann ein Segment eines Zylinders darstellen, welches sich beispielsweise ergeben würde, wenn man einen Zylinder entlang seiner Längsrichtung durchschneidet. Dabei kann vorzugsweise ein Achtel, ein Viertel, drei Achtel, die Hälfte, fünf Achtel, drei Viertel und/oder sieben Achtel eines kompletten Zylinders vom Segment umfasst sein. Dieses Segment bildet bevorzugt im Wesentlichen das Umlenkelement und liegt insbesondere innerhalb des Kanals vor. Das Segment kann insbesondere in Form einer Zylindersegmentartigen Ausbuchtung innerhalb einer Seitenwand des Kanals vorliegen. Die axiale Anordnung des bereichsweise zylinderförmigen Umlenkelements senkrecht zur Polymerströmungsrichtung bezieht sich insbesondere auf eine axiale Anordnung senkrecht zur gemittelten Polymerströmungsrichtung. Die Ausrichtung kann vorzugsweise ebenso senkrecht zur geradlinigen Führung zwischen Zuführung und Abführung definiert werden. Eine solche Definition ist insbesondere sinnvoll, wenn das Polymer im Wesentlichen nicht von der Zuführung zur Abführung strömt. Insbesondere ist das Umlenkelement in Form eines in den Kanal reinragenden Zylindersegments ausgestaltet. Es kann auch bevorzugt sein, dass die axiale Anordnung senkrecht (oder im Wesentlichen senkrecht) zu einer geraden Verbindung zwischen Zuführung des Polymers und/oder des Faserrovings und Abführung ist und/oder senkrecht (oder im Wesentlichen senkrecht) zu einer Längsachse des Kanals. Bevorzugt stimmen mindestens zwei dieser Definitionen der senkrechten Anordnung überein. Ein solches Umlenkelement ist besonders effektiv, robust und einfach herzustellen.

Das Umlenkelement ist vorzugsweise mindestens bereichsweise zylinderförmig oder rund und eine weist eine axiale Anordnung im Infiltrationskanal auf, wobei durch die Anordnung eine Ablenkung der Faser von einem linearen Verlauf zwischen Ein- und Ausgang ermöglicht werden kann.

In einer weiteren bevorzugten Ausführungsform der Erfindung ist das Umlenkelement von mindestens einer abgerundeten Kante und/oder eines Stiftes innerhalb des Kanals umfasst. Diese Ausführungsform kann eine bevorzugte Ausführungsform des vorgenannten, bereichsweise zylinderförmigen Umlenkelements sein. Eine abgerundete Kante kann vorzugsweise in den Kanal hineinragen und so für das Faserroving ein Umlenkelement auf seinem "direkten" Weg zwischen Zuführung und Abführung darstellen. Eine abgerundete Kante kann vorzugsweise direkt in eine Seitenwand des Kanals integriert sein und/oder ein Bestandteil einer Seitenwand des Kanals sein. Eine abgerundete Kante kann vorzugsweise wie ein oben beschriebenes Segment eines Zylinders ausgestaltet sein. Ein Stift kann eine besondere Ausführungsform eines zumindest bereichsweise zylinderförmigen Elements sein, und stellt bevorzugt einen kompletten Zylinder dar. Ein solcher Stift kann zumindest bereichsweise in beschriebener Form in den Kanal hineinragen. Es ist insbesondere bevorzugt, dass ein solcher Stift ein separates Element darstellt, welches durch eine Arretierungsvorrichtung in der Seitenwand des Kanals befestigt werden kann. Insbesondere lässt sich ein solcher Stift ausbauen, was für eine Wartung und/oder Reinigung besonders vorteilhaft ist.

In einer weiteren bevorzugten Ausführungsform der Erfindung weist das Umlenkelement eine Krümmung quer zur Polymerströmungsrichtung auf, welche wenigstens bereichsweise durch einen Radius beschreibbar ist, wobei der Radius vorzugsweise zwischen 1-20 mm, stärker bevorzugt zwischen 2-5 mm und insbesondere 4 mm beträgt. Dieser Radius würde beispielsweise bevorzugt bei einem Stift, eine abgerundete Kante und/oder einem bereichsweise zylinderförmigen Umlenkelement den Radius des (segmentierten/bereichsweise vorhandenen) Zylinders umfassen. Die beschrieben Radien haben sich insbesondere für eine Aufweitung und Geschwindigkeitsänderung als überraschend geeignet herausgestellt.

In einer weiteren bevorzugten Ausführungsform der Erfindung ist das Umlenkelement, insbesondere die abgerundete Kante und/oder der abgerundete Stift so positioniert, dass es die Mitte des Kanals überschreitet. Die Mitte des Kanals wird vorzugsweise durch eine Symmetrieachse in Längsrichtung beschrieben und/oder durch einen Bereich innerhalb des Kanals in Längsrichtung der von ihn umgebenden nächstliegenden Stellen von Seitenwänden ungefähr gleich weit entfernt ist. Durch eine solche Positionierung ist eine Ablenkung besonders stark, das Faserroving kann nicht entlang einer mittig angeordneten Längsachse entlang dieser von der Zuführung zur Abführung geführt werden, sondern wird auf seinem Weg von mindestens einem Umlenkelement umgelenkt, so dass eine Aufweitung und/oder eine bereichsweise quer zur Polymerströmungsrichtung Führung/Umlenkung erzielt wird. So wird die Infiltration und Anbindung der Polymermatrix im Faserroving überraschend verbessert.

Nun folgt eine beispielhafte Darstellung der bevorzugten Ausführungsform. Kernstück des Druckkopfes ist vorzugsweise die Infiltrationseinheit, bei der die Fasern mit der Polymerschmelze (Matrixmaterial) infiltriert werden. Die Infiltration wird bevorzugt ermöglicht, in dem die Fasern um abgerundete Kanten oder Stifte laufen. Die Anzahl der abgerundeten Kanten/ Stifte beträgt bevorzugt Minimum 1, stark bevorzugt 2-8, insbesondere 5. Der Radius der Stifte/ Kanten beträgt bevorzugt zwischen 1-20 mm oder größer, besonders bevorzugt zwischen 2-5, insbesondere 4 mm. Die abgerundeten Kanten/ Stifte sind vorzugsweise so positioniert, dass sie die Mitte des Kanals überschreiten, sodass die Fasern abgelenkt werden. Insbesondere sind sie so positioniert, dass sich ein Mittelpunktswinkel kleiner 180° ergibt. Bevorzugt ist der Mittelpunktswinkel in etwa 32,5° was bei einem bevorzugten Stiftradius von 4 mm eine Bogenlänge von 2,26 mm entspricht. Die Bogenlänge ist hierbei insbesondere die Kontaktlänge zwischen Faser und Stift. Der Mittelpunktswinkel beschreibt bevorzugt den Winkel, den verschiedene Endpunkte eines Kreisbogens mit seinem Mittelpunkt M bilden. Der Mittelpunktswinkel wird dabei bevorzugt bei einer Betrachtung eines Querschnitts des Infiltrationskanals und/oder der Umlenkelemente bestimmt. Dabei sind die betrachteten Endpunkte insbesondere die beiden Endpunkte eines Kontaktbereichs der Faser mit dem Umlenkelement und der Mittelpunkt liegt vorzugsweise auf der Achse des mindestens bereichsweise zylinderförmigen Umlenkelements.

Durch diese Anordnung wird der Faserstrang insbesondere aufgeweitet und es ist somit einfacher den Roving/ das Faserbündel mit der schmelzförmigen Matrix zu durchdringen/ infiltrieren, da aus dem Strang mit rundem Querschnitt vorzugsweise ein Band mit deutlich kleinerer Dicke zum Infiltrieren entsteht. Außerdem wird an den abgerundeten Kanten/ Stiften ein Druckfeld aufgebaut mit dem das Matrixpolymer in die Fasern eingepresst/ eingearbeitet werden kann. Die Zuführung der Schmelze kann in Form eines Filaments, Granulats oder anderer Art erfolgen. Die Aufschmelzung des Werkstoffes kann bevorzugt im Werkzeug selbst, oder im Prozess vor der Zuführung ins Werkzeug erfolgen. Die Werkzeugtemperatur sollte vorteilhaferweise höher sein als die Schmelztemperatur des Matrixpolymers. Es wird die Nutzung von Filamenten bevorzugt, die mittels Bowdenextruder in das Werkzeug gefördert werden. Vorteil ist hierbei, dass der bewegte Druckkopf nicht das Gewicht des Extrudermotors tragen muss und somit bewegte Masse reduziert werden kann. Für spezielle Polymere, die zu starkem Kettenabbau neigen, wäre es auch möglich direkt Granulate zu nutzen, die mit einem Schneckenextruder eine Schmelze erzeugen.

In einer weiteren bevorzugten Ausführungsform der Erfindung wird eine Aufschmelzung des Polymers vor der Zuführung vorgenommen. Das Polymer kann bereits in flüssiger Form der Infiltrationseinheit zugeführt werden. So benötigt diese weniger Energie zur Erzeugung der Wärme, die für einen Phasenübergang des Polymers hin zu einem flüssigen Zustand benötigt wird. So kann die Infiltrationseinheit besonders einfach, kompakt und leicht gehalten werden.

In einer weiteren bevorzugten Ausführungsform der Erfindung ist das Heizelement konfiguriert für eine zumindest bereichsweise Aufheizung des Polymers und/oder des Faserrovings auf eine Temperatur oberhalb der Schmelztemperatur des Polymers. So kann besonders effizient das Polymer in einem flüssigen Zustand gehalten werden. Es kann besonders bevorzugt sein, dass durch eine Temperatur deutlich oberhalb des Schmelzpunktes ein besonders flüssiges Polymer erzeugt wird, welches besonders gut die Fasern des Bündels benetzt. Es kann ebenso bevorzugt sein, dass die Temperatur so gewählt wird, dass das Polymer eher zähflüssig ist (z. B. nur leicht erhöht gegenüber der Schmelztemperatur). Bei einigen Materialien kann dadurch die Reibung zwischen Faserbündel und Polymer erhöht werden, wodurch eine bessere Vernetzung erreicht werden kann.

Erfindungsgemäss weist die Infiltrationseinheit mindestens einen Materialüberlauf für das Polymer auf. So kann überschüssiges Matrixpolymer abgeführt werden. Mit dem Überlauf ist es möglich, dass im Werkzeug ein niedriger Druck herrscht. Falls ein hoher Druck entsteht, kann es passieren, dass Poren im Matrixmaterial unter Druck stehen und dann bei einem weiteren Aufschmelzen expandieren und die Qualität des Verbundes deutlich verschlechtern. Dies wird mittels geringerem Druck vermieden bzw. reduziert. Dabei kann der Überlauf so dimensioniert werden, dass hierdurch in Verbindung mit der Zuführung ein bevorzugter Druckbereich innerhalb der Infiltrationseinheit einstellbar ist.

In einer weiteren bevorzugten Ausführungsform der Erfindung ist der Materialüberlauf konfiguriert für ein Abführen des Polymers in der Polymerströmungsrichtung und/oder in und/oder entgegengesetzt der Faserbewegungsrichtung. Die Anordnung des Überlaufs kann bevorzugt in Faserbewegungsrichtung - und/oder Polymertransportrichtung erfolgen oder auch gegenläufig der Faserbewegungsrichtung. So kann je nach Bauform des Druckkopfes oder des kompletten Druckers eine geeignete Bauform gefunden werden. Es können vorzugsweise auch mehreren Zuführungen umfasst sein (siehe unten), dann wird die Größe und/oder Anzahl des mindestens einen Überlaufes vorzugsweise angepasst werden.

In einer weiteren bevorzugten Ausführungsform der Erfindung wird das Polymer zugeführt in Form eines Granulats und/oder Filaments. Ein Filament ist bevorzugt ein Kunststoff, der in länglicher Form, z. B. in Drahtform und/oder auf Rollen konfektioniert vorliegt und häufig im FDM/FFF-Verfahren zum Einsatz kommt. Ein Granulat ist bevorzugt ein Polymer, welches in Form grober Körner bzw. Partikel vorliegt. Polymere in dieser Form sind besonders einfach und durch Standardverfahren zuzuführen. Da Polymere oft standardmäßig auf diese Weise bezogen werden können, können diese günstig und ressourcenschonend beschafft werden.

In einer weiteren bevorzugten Ausführungsform der Erfindung wird das Filament direkt und/oder durch einen Bowden-Extruder zugeführt. Ein Bowden-Extruder ist insbesondere eine schlauchförmige Hülle, in der das Filament geführt werden kann, bevorzugt einem Bowdenzug. Bevorzugt wird der Bowden-Extruder an der Zuführung befestigt. Vorzugsweise wird das Filament durch einen Antrieb bewegt und/oder zugeführt, z. B. einem Schritt-Motor. Der Bowden-Extruder ist vorzugsweise flexibel und der Antrieb insbesondere nicht direkt am Druckkopf, sondern z. B. an einem Gehäuse bzw. Chassis befestigt. Ein besonderer Vorteil ist hierbei, dass der bewegte Druckkopf nicht das Gewicht des Antriebs (vorzugsweise auch Extrudermotor genannt) tragen muss und somit bewegte Masse reduziert werden kann.

In einer weiteren bevorzugten Ausführungsform der Erfindung wird das Granulat durch einen Schneckenextruder zugeführt. Neben der Förderung des Filaments ist es vorzugsweise auch möglich die Polymerschmelze durch einen Schneckenextruder oder vergleichbare Geräte herzustellen und diese direkt in den Druckkopf zu führen. Ein Schneckenextruder wird die Fortbewegung und Zuführung des Granulats vorzugsweise durch eine drehbar angetriebene Schnecke zugeführt. Dabei kann das Granulat bereits vor der Zugführung, in der Schnecke erwärmt und/oder geschmolzen werden. So kann eine Zuführung und/oder Schmelze besonders effektiv durchgeführt werden. Insbesondere für spezielle Polymere, die zu starkem Kettenabbau neigen, wäre es die Verwendung von Granulaten, die mit einem Schneckenextruder geschmolzen werden, eine gute Möglichkeit zur Erzeugung einer Schmelze.

In einer weiteren bevorzugten Ausführungsform der Erfindung ist eine Materialfördereinheit nach der Infiltrationseinheit umfasst, welche konfiguriert ist für einen Transport des Faserverbundwerkstoffs in Richtung Düse. Diese kann vorzugsweise auch als Abzugseinheit bezeichnet werden. Insbesondere ist bevorzugt, dass das Material, welches durch die Abführung aus der Infiltrationseinheit gelangt, zumindest teilweise erkaltet und verfestigt, so dass ein gutes Handling und/oder eine gute Förderung realisiert werden kann. Daher ist diese Ausführungsform insbesondere in Kombination mit einem darauffolgenden Hotend (s. u.) geeignet. Die Materialfördereinheit kann z. B. zwei sich gegenförmig drehende Rollen oder Räder umfassen, durch deren Bewegung ein zwischen diesen Rollen oder Rädern vorliegender Faserverbundwerkstoff gefördert werden kann.

In einer weiteren bevorzugten Ausführungsform der Erfindung ist ein Schneidwerkzeug umfasst für eine Zuschneidung und/oder Zerschneidung des Faserverbundwerkstoffs. Ein Schneidwerkzeug, auch Schneideeinheit genannt, kann z. B. durch ein Messer und/oder ein klemmzangenartiges Element realisiert werden, welches bei Bedarf so in Richtung eines Faserverbundwerkstoffes, eines Faserrovings und/oder eines Filaments bewegt wird, dass dieses an einer gewünschten Stelle/einem gewünschten Bereich durchtrennt wird, vorzugsweise in Querrichtung. Das Schneidwerkzeug kann dabei z. B. an der Abführung der Infiltrationseinheit, außerhalb dieser, angeordnet vorliegen. Vorteilhafterweise ist es durch die Schneideeinheit möglich, z. B. in einer Schicht mehrere verstärkte Bereiche einzufügen, zwei Bauteile ohne direkte Verbindung zu drucken oder auch Sollbruchstellen einzufügen. Es kann vorzugsweise während des Druckens abgesetzt werden und mit einem neuen Faserverbundwerkstoff wieder angesetzt werden. Vorteilhafterweise ist nur mit der Schneideeinheit eine Fertigung komplexer Bauteile, z. B. mit lokalen Verstärkungen möglich. Die Infiltrationskammer zur Herstellung eines porenfreien Verbundwerkstoffes bestehend bevorzugt aus Faser und Matrix kann um eine Schneideeinheit erweitert werden. Diese befindet sich z. B. zwischen der beheizten Infiltrationskammer und der beheizten Düse oder nach der Düse. Mit Düse wird hier bevorzugt die unterste Werkzeugöffnung beschrieben, die den Verbundwerkstoff auf der Bauteilplattform/der Druckfläche ablegt. Am Werkzeug befindet sich daher in diesem Aufbau bevorzugt nur ein Ausgang für den Faserverbundwerkstoff. Zur Förderung des Verbundwerkstoffes wird insbesondere eine Fördereinheit zwischen Schneideeinheit und Infiltrationswerkzeug mit davorliegender Kühlung verwendet. Zur Förderung des Materials wird diese bevorzugt auf Temperaturen unterhalb des Schmelzpunktes abgekühlt werden, in der Regel auch unter der Glasübergangstemperatur des Matrixwerkstoffes, um ein Verformen des Strangs zu vermeiden. Bei der Anordnung der Schneideeinheit zwischen Düse und Infiltrationskammer wird vorzugsweise beachtet, dass das Material nach dem Schnitt noch bevorzugt abgelegt werden muss. Im Maschinencode wird die korrekte Steuerung der Schneideeinheit bevorzugt entsprechend konfiguriert. So erfolgt der Schnitt insbesondere vor Beendigung der abgelegten Bahn je nach Distanz zwischen Schneideeinheit und Düse. Bei einem neuen Ansetzen des Verbundes soll vorzugsweise das Material auch wieder bis zur Düse gefördert werden. Durch die Schneideeinheit ist es möglich in einer Schicht mehrere verstärkte Bereiche einzufügen, zwei Bauteile ohne direkte Verbindung zu drucken oder auch Sollbruchstellen einzufügen. Die Schneideeinheit ist ein vorteilhaftes Element im Druckkopf, welches die Fertigung komplexer Bauteile mit lokalen Verstärkungen ermöglicht.

In einer weiteren bevorzugten Ausführungsform der Erfindung liegt das Schneidwerkzeug vor der Düse, zwischen Düse und Infiltrationseinheit angeordnet vor. So kann der Faserverbundwerkstoff zugeschnitten werden, bevor es aus der Düse austritt und verdruckt wird. Eine so realisierte Schneideinheit ist besonders einfach zu implementieren, da die Düse direkt an der Druckfläche in einem Druckbereich verbleiben kann während des Zuschneidens. Bei der Anordnung der Schneideeinheit zwischen Düse und Infiltrationskammer kann bevorzugt beachtet werden, dass das Material nach dem Schnitt noch abgelegt werden muss. Im Maschinencode einer Steuerungsvorrichtung, welche die genannten Prozesse regelt (z. B. integrierte Schaltung), wird die korrekte Steuerung der Schneideeinheit vorzugsweise entsprechend konfiguriert. So erfolgt der Schnitt bevorzugt vor Beendigung der abgelegten Bahn je nach Distanz zwischen Schneideeinheit und Düse, da nach dem Schnitt insbesondere das restliche Material aus der Düse gezogen werden muss. Bei einem neuen Ansetzen muss bevorzugt dementsprechend das Material auch wieder bis zur Düse gefördert werden, bevor ein erneutes Verdrucken vorgenommen werden kann. Vorzugsweise wird der Faserverbundwerkstoff in dieser Ausführungsform vor dem Schneiden zumindest soweit erkaltet, dass ein präzises Zuschneiden ermöglicht wird. Daher ist in dieser Ausführungsform insbesondere die Kombination mit einem nachfolgenden Hotend bevorzugt.

In einer weiteren bevorzugten Ausführungsform der Erfindung ist ein Hotend umfassend eine Düse und ein Heizelement zum Heizen der Düse umfasst. Das Heizelement ist vorzugsweise in der Düse integriert. Hierdurch kann sichergestellt werden, dass der Faserverbundwerkstoff ausreichend flüssig bei einem Verdrucken ist, um eine Verbindung mit bereits verdrucktem Material und oder der Druckfläche herzustellen bzw. das der Faserverbundwerkstoff eine gewünschte Konsistenz für ein Verdrucken aufweist. Insbesondere wenn zwischen Infiltrationseinheit und Hotend ein zumindest teilweises Erkalten des Faserverbundwerkstoffes unterhalb der Schmelztemperatur des Polymers geschieht, ist ein Hotend bevorzugt.

In einer weiteren bevorzugten Ausführungsform der Erfindung ist ein Kühlelement zwischen Infiltrationseinheit und Schneidwerkzeug und/oder Hotend umfasst. Durch das Kühlelement kann ein Erkalten des Faserverbundwerkstoffes aktiv gefördert werden, z. B. um ein besseres Schneiden und/oder einen Transport durch eine Abzugseinheit zu erreichen. Danach ist aus vorgenannten Gründen insbesondere eine Düse in Form eines Hotends vorteilhaft. Ein Kühlelement kann z. B. ein passives Kühlelement sein, welches im Wesentlichen durch einen Kühlkörper gebildet wird, welcher Rippen zur Kühlung aufweist. Dabei wird der Faserverbundwerkstoff im Inneren des Kühlkörpers geführt und dabei vorzugsweise gekühlt. Es kann ebenso bevorzugt sein, dass der Kühlkörper eine aktive Kühlung ermöglich, z. B. durch ein kühlendes Peltier-Element.

In einer weiteren bevorzugten Ausführungsform der Erfindung liegt das Schneidwerkzeug hinter der Düse angeordnet vor und der Druckkopf ist vorzugsweise konfiguriert für eine Abstandsänderung zwischen Düse und Druckfläche zum Zuschneiden des Faserverbundwerkstoffs durch das Schneidwerkzeug. So kann eine Längenbemessung eines zusammenhängenden, zu verdruckenden Faserverbundwerkstoffs besonders einfach und präzise beschnitten werden, da direkt am zu verdruckenden Werkstück geschnitten wird. Dabei kann es bevorzugt sein, dass die Düse, die normalerweise direkt an einer zu druckenden Stelle angeordnet ist, etwas angehoben wird, damit das Schneidewerkzeug an diese Stelle treten und eine Beschneidung vornehmen kann.

In einer weiteren bevorzugten Ausführungsform der Erfindung umfasst der Druckkopf weiterhin ein Zuführungselement, aufweisend eine erste Fördereinheit für das Polymer und eine zweite Fördereinheit für das Faserroving, sowie bevorzugt ein Kühlelement zwischen Infiltrationseinheit und Zuführungselement. Ein Zuführungselement arbeitet vorzugsweise mit der mindestens einen Zuführung zusammen und befördert die Zuführung aktiv durch eine Fördereinheit. Eine Fördereinheit für das Polymer in Form eines Filaments und/oder des Faserbündels kann vorzugsweise durch sich gegenläufig drehende Rollen realisiert werden, ähnlich der vorstehend beschriebenen Abzugseinheit für den Faserverbundwerkstoff. Eine Fördereinheit für das Polymer in Form eines Filaments und/oder des Faserbündels kann ebenso durch einen bowdenzugartiges System realisiert werden, ähnlich dem vorstehenden Bowden-Extruder. Ebenso kann für das Polymer in Form eines Granulats ein Schneckenextruder bevorzugt werden. Bevorzugt liegt ein Kühlelement zwischen Infiltrationseinheit und Zuführungselement vor. So kann bevorzugt verhindert werden, dass das insbesondere das Polymer zu stark erhitzt wird und durch ein Schmelzen für die Zuführung ungeeignete Eigenschaften erhält. Das Kühlelement kann dabei bevorzugt ähnlich zu dem vorstehend beschriebenen Kühlelement aufgebaut sein. Die Zuführung des Matrixmaterials kann durch ein Filament geschehen, welches z.B. durch einen Bowdenschlauch zum Druckkopf geführt wird. Alternativ kann die Fördereinheit direkt an das Werkzeug angeschlossen und mitbewegt werden. Die Förderung in Form eines Filaments wird in der Regel bei allen Firmwares der 3D Drucker unterstützt. Neben der Förderung des Filaments ist es auch möglich die Polymerschmelze durch einen Schneckenextruder oder vergleichbare Geräte herzustellen und diese direkt in den Druckkopf zu führen. Vorteile können sein, dass somit die Aufheizzeiträume verringert werden, da die Herstellung des Filaments schon in einem Extruder erfolgt wo z.B. bei empfindlichen Polymeren Kettenabbau einsetzen kann.

In einer weiteren bevorzugten Ausführungsform der Erfindung liegt das Schneidwerkzeug zwischen Zuführungselement und Infiltrationseinheit vor. So kann ein Zuschneiden, insbesondere des Faserrovings, schon vor der Zuführung realisiert werden. Diese Ausführungsform ist insbesondere sinnvoll, wenn zwar das Polymer zusammenhängend verdruckt werden soll, jedoch an einigen Stellen die Verstärkung durch die Fasern unterbrochen werden soll, um z. B. besonders filigrane und spitzwinklige Strukturen zu verdrucken.

In einer weiteren bevorzugten Ausführungsform der Erfindung ist ein Bowdensystem enthalten, wobei das Bowdensystem einen Bowdenschlauch zwischen Infiltrationseinheit und Hotend umfasst sowie ein Schneidwerkzeug, welches vor dem Bowdenschlauch oder hinter dem Bowdenschlauch, vor oder hinter dem Hotend angeordnet vorliegt. Das Bowdensystem ist vorzugsweise eine Ausführungsform einer Abzugseinheit. Dabei kann das Faserverbundmaterial aus der Abführung, welches vorzugsweise unterhalb der Schmelztemperatur des Polymers erkaltet ist, durch das Innere des Schlauches transportiert werden. Dabei kann beispielsweise mindestens ein Antrieb wie bereits beschrieben mit zwei gegenläufigen Rollen bzw. Rädern verwendet werden. Es kann bevorzugt zwei solcher Antriebe geben, wobei einer vor und einer hinter dem Bowdensystem angeordnet vorliegt. Bei einem solchen System kann aufgrund der Flexibilität des Bowdenschlauches die Düse bzw. das Hotend vorzugsweise unabhängig von der Infiltrationseinheit bewegt werden, wodurch sich ein bewegliches Element zur Steuerung des Druckprozesses ergibt, welches besonders kompakt und leicht ist und besonders schnell und effizient zum Verdrucken bewegt werden kann. Um die bewegte Masse des Druckkopfes stark zu verringern, ist es möglich/bevorzugt ein sogenanntes Bowdensystem zu verwenden. Bevorzugt wird die Fördereinheit/ der Extruder nicht bewegt und das Material wird mittels eines Bowden in das Hotend geführt und dort aufgeschmolzen und abgelegt. Da das Infiltrationswerkzeug ein gewisses Gewicht mit sich bringt, ist es möglich eine Einheit bestehend aus Infiltrationswerkzeug und Fördereinheit außen am Drucker anzubringen. So kann der hergestellte, abgekühlte Verbundwerkstoff bevorzugt mittels eines Bowden in das Hotend geführt werden um dann wieder aufgeschmolzen und in Bahnen abgelegt zu werden. Das Hotend, bestehend aus einer Düse und einem Heizbereich, kann hierbei vorteilhafterweis sehr klein ausfallen und damit auch sehr leicht. Die Schneideeinheit kann in das bewegte Hotend integriert werden um die Auszugsdistanz nach einem Schnitt zu verkürzen. Es ist aber auch möglich, diese direkt nach der Fördereinheit, also vor dem Bowden einzubauen, um das Gewicht weiter zu verringern. Dies hat bevorzugt zur Folge, dass sich die Auszugsdistanz verlängert. Durch die Nutzung eines Bowdens wäre es auch möglich, einen sehr kleinen, leichten Druckkopf aufzubauen, vorzugsweise mit weiteren Düsen/ Hotends um unterschiedliche Materialien zu verarbeiten und dadurch einen Multimaterial-Druck zu ermöglichen. Der Multimaterialdruck ist vorteilhaft in der additiven Fertigung, da so ein Bauteil in einem Schritt mit unterschiedlichen Funktionen aufgebaut werden kann.

In einer weiteren bevorzugten Ausführungsform der Erfindung sind mehrere Düsen und/oder Infiltrationseinheiten umfasst. Dadurch können verschiedene Faserverbundwerkstoffe mit verschiedenen Polymeren und oder Faserrovings bereitgestellt werden, welche im Wesentlichen und/oder teilweise gleichzeitig bzw. in kurzen Zeitabständen verdruckt werden können. So können Werkstücke mit unterschiedlichen Materialeigenschaften in den jeweiligen Bereichen besonders einfach und schnell verdruckt werden.

In einer weiteren bevorzugten Ausführungsform der Erfindung umfasst eine Infiltrationseinheit mehrere Zuführungen für das Polymer und/oder den Faserroving, wobei verschiedene Materialien und/oder Faserrovingstärken zugeführt werden können. Es ist so z. B. möglich, mehre Filamente und/oder Granulate in den Druckkopf zu führen, falls eine größere Menge an Matrixpolymer benötigt wird und/oder Polymere gemischt werden sollen. Mittels Mischelement ist es auch möglich zwei reagierende Polymere in das Werkzeug zu leiten und eine zusätzliche Aushärte/ Vernetzungsreaktion zu starten. Weiterhin ist es auf diese Weise möglich, gradierte Werkstoffe, beginnend mit Komponente A mit graduellem Übergang zu Komponente B, zu ermöglichen. Vorteile bei der Nutzung verschiedener Matrixwerkstoffe können eine bessere Fasermatrixanbindung und Infiltration sein, die in höherer Festigkeit des Bauteils resultieren. Für bestimmte Anwendungen ist es auch denkbar, dass eine schlechte Faser-Matrix-Anbindung interessant sein könnte um z.B. durch lokale Verformung eine Schutzfunktion zu gewährleisten. Es ist auch bevorzugt, mehre einzelne Faserstränge (Faserrovings) im Werkzeug zu vereinen oder jeweils getrennt zu infiltrieren. Die Infiltration ist schwieriger bei dickeren Faserbündeln und kann somit durch die Verwendung von dünneren Faserbündeln vereinfacht werden. Außerdem gibt es vorgeschriebene Stärken der Faserbündel. Für bestimmte Anwendungen wäre es denkbar, die Anzahl der Stränge anzupassen z.B. 3k, 6k, 12k und bei der Nutzung von 3 mal 3k wären 9k möglich. Es könnten so unterschiedliche Faserrovings sowohl nacheinander als auch gleichzeitig verdruckt werden. Es ist bevorzugt ebenfalls möglich, unterschiedliche Fasern zu kombinieren z.B. Kohlenstofffasern für eine hohe Festigkeit und Steifigkeit und zusätzlich Aramidfasern für eine hohe Schlagzähigkeit und große Bruchdehnung. Durch eine solche Kombination wäre die Festigkeit/ Steifigkeit höher durch die Kohlenstofffasern als bei den reinen Aramidfasern und die geringe Bruchdehnung von ca. 1,7 % der C-Fasern (Kohlenstofffasern) könnte durch das eher duktile Bruchverhalten der Aramidfaser deutlich verbessert werden, sodass vorteilhafterweise eher ein Verformungsbruch auftritt als ein Sprödbruch. Durch die Verwendung verschiedener Anzahlen an Strängen oder Faserarten können die Infiltration und damit die mechanischen Eigenschaften verbessert werden und eine Einstellung des gewünschten Werkstoffverhaltens wird ermöglicht. Es kann bevorzugt sein, dass mehrere Zuführungen durch dieselbe physische Öffnung erfolgen. Dies ist insbesondere für mehrere Faserrovings leicht realisierbar. Eine Zuführung ist dabei insbesondere der Einführung einer Art (Material, Stärke etc.) von Faserroving und/oder Polymer gewidmet.

Es kann auch bevorzugt sein, mehrere Stränge (Faserrovings) durch eine Zuführung zu führen oder 2 Faserrovings durch jeweils eine Zuführung.

In einer weiteren bevorzugten Ausführungsform der Erfindung ist ein Element für eine Vorbehandlung des Faserrovings umfasst, wobei die Vorbehandlung ausgesucht ist aus der Gruppe umfassend Sizing, Entfernen eine Epoxidschlichte und/oder Plasmabehandlung. Ein sogenanntes zweites Sizing kann aufgebracht werden, dass eine bessere Faser-Matrixanbindung durch chemische Bindungen ermöglicht. Das Entfernen der Epoxidschlichte mittels Temperatur ist ebenfalls bevorzugt möglich. Im Besonderen bringt eine Plasmabehandlung der Fasern einen Vorteil, da der Effekt der Plasmabehandlung zeitabhängig ist und die Zeit zwischen Behandlung und Verarbeitung je nach Materialien bevorzugt eingestellt werden kann. Bei der Plasmabehandlung wird die Oberfläche aktiviert und neue Bindungspartner gebildet sowie die Oberflächenenergien erhöht, um die Faser-Matrix-Anbindung deutlich zu verbessern. Des Weiteren kann durch eine vorgeschaltete Faseroptimierungseinheit (Element) z.B. auch eine Coronabehandlung, ein chemisches Ätzen und/oder Oxidieren, ein Aufbringen eines speziellen Sizings und/oder einer Temperaturbehandlung zur Oxidation und/oder Abbrennen des vorhandenen Sizings die Faseroberfläche modifiziert werden und somit eine bessere Faser-Matrixanbindung erreichen, die zur Folge hat, dass die Festigkeit gesteigert werden kann.

Sizing (englisch) oder Schlichte (deutsch) beschreiben beide bevorzugt eine Schutzschicht auf der Faser. Die Fasern sind z. B. relativ spröde und empfindlich und das Sizing/ Schlichte sorgt für einen Schutz. Häufig besteht das Sizing aus ca. 1-3 Gewichts% und ist ähnlich dem späteren Matrixmaterial, z.B. wird häufig eine Epoxidharzschlichte eingesetzt, da der Markt für Epoxidharzsystem am größten ist. Außerdem kann durch das Sizing vorzugsweise die Oberflächenchemie der Fasern verändert werden und dies führt zu einer besseren Anbindung zum Matrixmaterial, da die Fasern bevorzugt sehr unpolar sind. Bei Matrixwerkstoffen mit polarem Anteil (z. B. Polyamide) ist eine polare Faseroberfläche durch das Sizing hilfreich. Bei unpolaren Polymeren (z. B. PP, PE) kann es sinnvoll sein, das Sizing/Schlichte zu entfernen, um eine unpolare Oberfläche auf der Faser zu erzeugen. Bei einem Second-Sizing oder zweiten Sizing wird eine Chemikalie vorher auf die Faser mit oder ohne erstem Sizing aufgebracht, die dann die Oberflächeneigenschaften vorzugsweise beeinflusst.

In einem weiteren Aspekt betrifft die Erfindung eine Verwendung eines Druckkopfs nach der vorstehenden Beschreibung für ein additives Verfahren.

Der durchschnittliche Fachmann erkennt, dass technische Merkmale, Definitionen und Vorteile bevorzugter Ausführungsformen der erfindungsgemäßen Vorrichtung auch für die erfindungsgemäße Verwendung und deren Ausführungsformen gelten.

In einem weiteren Aspekt betrifft die Erfindung eine Verwendung eines Druckkopfs nach der vorstehenden Beschreibung zur Herstellung von Prepregs und/oder Organoblechen. Prepregs sind vorzugsweise mit Reaktionsharzen für eine Polymermatrix vorimprägnierte sogenannte Faser-Matrix-Halbzeuge, welche insbesondere mit einem Duromer getränkt sind. Diese können zur Herstellung von Bauteilen unter Temperatur und Druck weiterverwendet werden. Organobleche sind vorzugsweise mit thermoplastischen Polymeren getränkt.

Der durchschnittliche Fachmann erkennt, dass technische Merkmale, Definitionen und Vorteile bevorzugter Ausführungsformen der erfindungsgemäßen Vorrichtung auch für die erfindungsgemäße Verwendung und deren Ausführungsformen gelten.

In einem weiteren Aspekt betrifft die Erfindung ein Verfahren zur additiven Fertigung eines Faserverbundwerkstoffes umfassend eine Faserverstärkung in einer Polymermatrix mit einem Druckkopf nach der vorstehenden Beschreibung, umfassend die folgenden Schritte:
- Zuführen des Polymers und des Faserrovings zur Infiltrationseinheit über die mindestens eine Zuführung;
- Heizen der Infiltrationseinheit durch das Heizelement;
- Leiten des durch Erhitzen geschmolzenen Polymers innerhalb des Infiltrationseinheit entlang eines Kanals zwischen Zuführung und Abführung, bevorzugt mit der Polymerströmungsrichtung von der Zuführung zur;
- Leiten des Faserrovings entlang des Kanals über das Umlenkelement, wobei der Faserroving eine Geschwindigkeitsänderung erfährt, bereichsweise quer und/oder schräg zur Polymerströmungsrichtung von der Zuführung zur Abführung und/oder zur geradlinigen Führung zwischen Zuführung und Abführung geführt wird und/oder aufgeweitet wird.

Der durchschnittliche Fachmann erkennt, dass technische Merkmale, Definitionen und Vorteile bevorzugter Ausführungsformen der erfindungsgemäßen Vorrichtung auch für das erfindungsgemäße Verfahren und dessen Ausführungsformen gelten.

In einer bevorzugten Ausführungsform der Erfindung umfasst das Verfahren weiterhin folgende Schritte:
- Kontrollierte Relativbewegung zwischen Düse und Druckfläche und Drucken eines Faserverbundwerkstoffs auf der Druckfläche gemäß eines zu druckenden Objekts;
- Bevorzugt Zuschneiden des Faserverbundwerkstoffs mit dem Schneidwerkzeug während und/oder nach Beendigung eines Druckvorgangs.

Dieses Verfahren ermöglicht eine besonders einfache und flexible Herstellung durch ein FDM/FFF-Verfahren, wobei durch eine besonders gute Anbindung zwischen Faser und Polymermatrix ein Werkstück mit besonders verbesserten mechanischen Eigenschaften hergestellt werden kann.

In einer weiteren bevorzugten Ausführungsform der Erfindung umfasst das Faserroving Fasern ausgesucht aus der Gruppe umfassend Kohlenstofffaser, Aramidfaser und/oder Glasfaser und/oder Basaltfasern und/oder das Polymer ist ausgesucht aus der Gruppe umfassend Polyamide (insbesondere PA6, PA66, PA12), Polyetheretherketon, Polyetherketonketon, Polyphenylensulfid, Polysulfon, Polyetherimid, Polytetrafluorethen, Polycarbonat, Polyethylenterephthalat (unmodifiziert und modifiziert mit Glycol), Polylactide, Acrylnitril-Butadien-Styrol-Copolymer, Acrylnitril-Styrol-Acrylat-Copolymer, Styrol-Acrylnitril-Copolymer, Polybutylenterephthalat Polystyrol, Epoxidharz, ungesättigtes Polyesterharz, Vinylesterharz, Phenol-Formaldehydharz, Diallylphthalatharz, Methacrylatharz, Polyurethan, Melaminharz und/oder Harnstoffharz, bevorzugt zusätzlich Mischungen und Compounds bestehend aus den einzelnen Stoffen mit Additiven zur Steigerung der Faser-Matrixanbindung.

Diese Matrixmaterialien haben sich für eine flexible additive Fertigung mit einer Vielzahl flexibel wählbarer Faserwerkstoffe als besonders geeignet erwiesen und ergeben besonders gute mechanische Eigenschaften des additiv gefertigten Faserverbundwerkstoffes.

In einer weiteren bevorzugten Ausführungsform der Erfindung ist das Verfahren zur Herstellung einer Orthese und/oder Prothese. Orthesen und/oder Prothesen sind höchst individuell und damit besonders geeignet für eine flexible und schnelle additive Fertigung, bei der der verwendete Faserverbundwerkstoff frei und je nach Anforderung (z. B. Stabilität, Elastizität und/oder biologische Verträglichkeit) frei wählbar ist. Gleichzeitig handelt es sich um Höchst- und Dauerbeanspruchte Teile, wobei sich die besonders gute Anbindung der Matrix an die Faser als besonders geeignet erwiesen hat.

In einem weiteren Aspekt betrifft die Offenbarung einen Faserverbundwerkstoff umfassend eine Faserverstärkung in einer Polymermatrix, hergestellt durch einen Druckkopf nach der vorstehenden Beschreibung und/oder durch ein Verfahren nach der vorstehenden Beschreibung. Der durchschnittliche Fachmann erkennt, dass technische Merkmale, Definitionen und Vorteile bevorzugter Ausführungsformen der erfindungsgemäßen Vorrichtung und des erfindungsgemäßen Verfahrens auch für den offenbarten Werkstoff und dessen Ausführungsformen gelten.

### Weitere Vorzugsvarianten:

Bevorzugt ist eine Vorrichtung zur Herstellung eines Werkstoffs umfassend eine Faserverstärkung in einer Polymermatrix für die Faserverbundwerkstoffherstellung, umfassend:
- ein Mischungsvolumen für eine Mischung eines geschmolzenen Polymers und eines Faserrovings;
- mindestens eine Zuführung für ein Polymer und/oder ein Faserroving zum Mischungsvolumen;
- ein Heizelement zum zumindest teilweisen Schmelzen des Polymers innerhalb des Mischungsvolumens;
- mindestens ein Umlenkelement innerhalb des Mischungsvolumens sowie
- eine Abführung für den entstandenen Werkstoff,
wobei das geschmolzene Polymer innerhalb des Mischungsvolumens entlang einer Polymerströmungsrichtung von der Zuführung zur Abführung leitbar ist und das Faserroving von der Zuführung zur Abführung durch Umlenkung um das Umlenkelement bereichsweise quer zur Polymerströmungsrichtung führbar ist.

In einer bevorzugten Ausführungsform umfasst die Vorrichtung mindestens zwei, bevorzugt mindestens drei, stärker mindestens vier und insbesondere fünf Umlenkelemente.

In einer bevorzugten Ausführungsform ist das Umlenkelement zylinderförmig und weist eine axiale Anordnung senkrecht zur Polymerströmungsrichtung innerhalb des Mischungsvolumens auf, wobei die Anordnung und/oder eine radiale Ausdehnung des Umlenkelements konfiguriert ist für die Umlenkung des Faserrovings um das Umlenkelement, eine Geschwindigkeitsänderung des Faserrovings, eine Aufweitung des Faserrovings und/oder die Führung des Faserrovings quer zur Polymerströmungsrichtung.

In einer bevorzugten Ausführungsform wird das Polymer in Form eines Granulats und/oder Filaments zugeführt.

In einer bevorzugten Ausführungsform ist weiterhin eine Materialfördereinheit nach dem Mischungsvolumen umfasst, welche konfiguriert ist für einen Transport des Werkstoffs.

In einer bevorzugten Ausführungsform ist weiterhin ein Schneidwerkzeug für eine Zerschneidung und/oder Zuschneidung des Werkstoffs umfasst.

In einer bevorzugten Ausführungsform ist weiterhin einen Druckkopf mit einer Düse für eine additive Fertigung umfasst, wobei sich die Düse an der Abführung des Mischungsvolumens befindet.

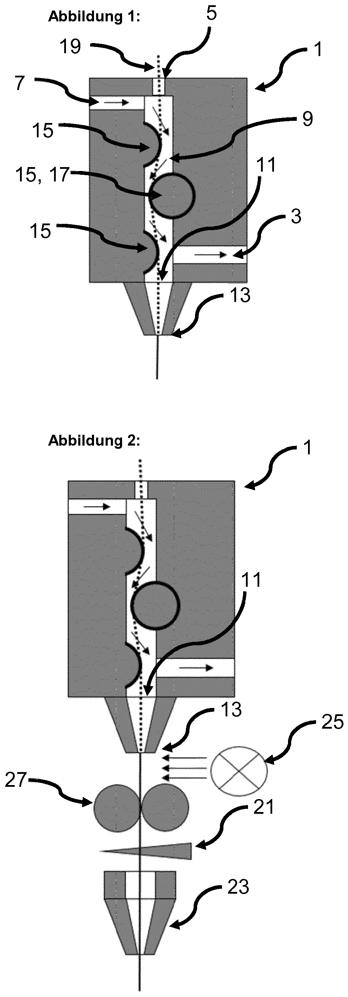

In einer bevorzugten Ausführungsform befindet sich das Schneidwerkzeug vor einer Düse des Druckkopfs, wobei hier bevorzugt eine zweite Düse nicht am Mischungselement angeschlossen ist sondern an einer 2. Aufheizeinheit nach der Infiltrationseinheit (siehe z. B. Abbildung 2 unten).

In einer bevorzugten Ausführungsform befindet sich das Schneidwerkzeug hinter einer Düse des Druckkopfs und die Vorrichtung ist konfiguriert für eine Abstandsänderung zwischen Druckkopf und einer Druckfläche zum Zuschneiden des Werkstoffs durch das Schneidwerkzeug.

In einer bevorzugten Ausführung befindet sich das Schneidwerkzug hinter einem Auslass an der Infiltrationseinheit und vor einer zweiten Düse/ Aufheizeinheit, um das Material aus der Infiltrationseinheit herauszuziehen, bei Bedarf abzuschneiden und durch die zweite Düse/ Aufheizeinheit in Form des Bauteils abzulegen.

In einer bevorzugten Ausführungsform ist weiterhin ein Zuführungselement, aufweisend eine erste Fördereinheit für das Polymer und eine zweite Fördereinheit für das Faserroving, sowie bevorzugt einen Kühler zwischen Mischungsvolumen und Zuführungselement umfasst, wobei die Vorrichtung bevorzugt konfiguriert ist für eine additive Fertigung eines Faserverbundwerkstoffes. In einer bevorzugten Ausführungsform liegt das Schneidwerkzeug zwischen Zuführungselement und Mischungsvolumen vor.

In einer bevorzugten Ausführungsform wird die Vorrichtung verwendet für ein additives Verfahren.

In einer bevorzugten Ausführungsform wird die Vorrichtung verwendet zur Herstellung von Prepregs/Organoblech.

Außerdem ist in einer Ausführungsform ein Verfahren zur Herstellung eines Werkstoffs betroffen, umfassend eine Faserverstärkung in einer Polymermatrix für die Faserverbundwerkstoffherstellung mit einer Vorrichtung nach einem oder mehreren der oben genannten Vorzugsvarianten, umfassend die folgenden Schritte:
- Zuführen des Polymers und des Faserrovings zum Mischungsvolumen über die Zuführung;
- Heizen des Mischungsvolumens durch das Heizelement;
- Leiten des geschmolzenen Polymers innerhalb des Mischungsvolumens entlang der Polymerströmungsrichtung von der Zuführung zur Abführung
- Leiten des Faserrovings von der Zuführung zur Abführung über das Umlenkelement, wobei das Faserroving eine Geschwindigkeitsänderung erfährt, bereichsweise quer zur Polymerströmungsrichtung geführt wird und/oder aufgeweitet wird.

In einer bevorzugten Ausführungsform umfasst das weiterhin folgende Schritte:
- Kontrollierte Relativbewegung zwischen Druckkopf und Druckfläche und Drucken eines Faserverbundwerkstoffs auf der Druckfläche gemäß eines zu druckenden Objekts;
- Bevorzugt Zuschneiden des Faserverbundwerkstoffs mit dem Schneidwerkzeug während und/oder nach Beendigung eines Druckvorgangs.

In einer bevorzugten Ausführungsform des Verfahrens umfasst das Faserroving Fasern ausgesucht aus der Gruppe umfassend Kohlenstofffaser, Aramidfaser und/oder Glasfaser und/oder Basaltfasern und/oder das Polymer ist ausgesucht aus der Gruppe umfassend Polyamide (insbesondere PA6, PA66, PA12), Polyetheretherketon, Polyetherketonketon, Polyphenylensulfid, Polysulfon, Polyetherimid, Polytetrafluorethen, Polycarbonat, Polyethylenterephthalat (unmodifiziert und modifiziert mit Glycol), Polylactide, Acrylnitril-Butadien-Styrol-Copolymer, Acrylnitril-Styrol-Acrylat-Copolymer, Styrol-Acrylnitril-Copolymer, Polybutylenterephthalat Polystyrol, Epoxidharz, ungesättigtes Polyesterharz, Vinylesterharz, Phenol-Formaldehydharz, Diallylphthalatharz, Methacrylatharz, Polyurethan, Melaminharz und/oder Harnstoffharz, bevorzugt zusätzlich Mischungen und Compounds bestehend aus den einzelnen Stoffen mit Additiven zur Steigerung der Faser-Matrixanbindung.

In einer bevorzugten Ausführungsform ist das Verfahren zur Herstellung einer Orthese und/oder Prothese.

Außerdem ist in einer Ausführungsform ein Werkstoff für einen Faserverbundwerkstoff betroffen, umfassend eine Faserverstärkung in einer Polymermatrix, hergestellt durch eine Vorrichtung wie vorstehend beschrieben und/oder durch ein Verfahren wie vorstehend beschrieben.

Es wurde auch ein neuartiges Verfahren zur additiven Fertigung von Verbundwerkstoffen mit endlosen Kohlenstofffasern bereitgestellt. Hierbei wurde ein neues Druckkopfdesign erforscht und bereitgestellt, welches die Kohlenstofffasern im Druckkopf beispielsweise mit einer PA6 Schmelze infiltriert. Untersuchungen ergaben Biegefestigkeiten von bevorzugt bis zu 550 MPa, einem Biegemodul von bevorzugt ca. 40 GPa und einem Faservolumengehalt von bevorzugt 30-35%. Die additive Fertigung bietet große Vorteile für die automatisierte Herstellung von Faserverbundwerkstoffen. So wird das Bauteil ohne Werkzeug mit Stützstrukturen auf einer Druckplattform aufgebaut. Durch weitere Druckköpfe ist ein Multimaterialansatz möglich, wobei die Faserverstärkung vor allem dort eingesetzt wird, wo hohe Festigkeiten nötig sind. Die Nachhaltigkeit ist überraschend hoch, da kein Verschnitt beim Einsatz von Kohlenstofffasern auftritt wie es z.B. bei der Verarbeitung von Organoblechen üblich ist.

### Detaillierte Beschreibung

Im Folgenden soll die Erfindung anhand von Beispielen und Figuren näher erläutert werden, ohne auf diese beschränkt zu sein.

### Kurzbeschreibung der Abbildungen

**Figur 1** zeigt eine schematische Darstellung des Druckkopfes mit Infiltrationseinheit und Überlauf.
**Figur 2** zeigt eine schematische Darstellung des Druckkopfes samt Infiltrationseinheit mit Schneideeinheit und zweiter Düse.
**Figur 3** zeigt eine schematische Darstellung des Druckkopfes samt Infiltrationseinheit mit einem Bowdensystem.
**Figur 4** zeigt eine schematische Darstellung des Druckkopfes mit jeweils mehreren Zuführungen für Polymer und Faserroving.
**Figur 5** zeigt ein Biegespannung-Verfomungsdiagramm eines 3-Punkt-Biegeversuchs mit gedruckter Verbundwerkstoffprobe eines Druckkopfes ohne Infiltrationseinheit.

### Detaillierte Beschreibung der Abbildungen

**Figur 1** zeigt eine schematische Darstellung des Druckkopfes mit Infiltrationseinheit **1** und Überlauf **3.** Am oberen Ende der Infiltrationseinheit sind die Zuführung für das Faserroving **5** und für das Polymer **7** in Form von Filament, Schmelze und/oder Granulat zu erkennen. Diese münden in einem Kanal **9** bis zur unteren Abführung **11,** welche direkt in eine Düse **13** mit verengenden Austrittsquerschnitt für den zu verdruckenden Faserverbundwerkstoff übergeht. Es sind im Kanal **9** drei Umlenkelemente **15** sichtbar, welche verschieden ausgestaltet sind. Auf der linken Seite sind zwei übereinander angeordnete Umlenkelemente **15** in Form von abgerundeten Kanten ersichtlich, welche in Form eines in den Kanal **9** reinragenden Zylindersegments ausgestaltet sind. Auf der rechten Seite ist ein einzelnes Umlenkelement **15** in Form eines zylinderförmigen Stiftes **17** angeordnet, der in die Seitenwand des Kanals **9** eingelassen ist. Es ist zu erkennen, dass die Umlenkelemente über die Mitte des Kanals in Längsrichtung **19** (gestrichelte Linie) hinausragen und somit insbesondere für das Faserroving eine Umlenkung bilden (Pfeile im Kanal **9).** Am unteren Ende des Kanals **9,** vor der Abführung **11,** ist ein nach rechts zeigender Überlauf **3** für überschüssige Polymerschmelze gezeigt.

**Figur 2** zeigt eine schematische Darstellung des Druckkopfes samt Infiltrationseinheit **1** mit Schneideeinheit **21** und zweiter Düse **23.** Der aus der Abführung **11** und der ersten Düse **13** des Druckkopfes austretende Faserverbundwerkstoff wird durch eine Kühlung (ein Kühlelement **25)** zum Erkalten und teilweisen Aushärten gebracht, so dass die darauffolgende Abzugseinheit **27** in Form zweier sich gegenläufig drehender Rollen den Werkstoff gut transportieren kann. Ebenso eignet sich der Werkstoff nun zum Beschneiden durch eine Schneideinheit **21,** welche direkt vor einer zweiten Düse **23** angeordnet ist, welche zum Ablegen des Materials auf der Druckfläche ausgelegt ist. Vorzugsweise ist diese zweite Düse **23** ein Hotend, so dass der Werkstoff zum Verdrucken erneut aufgeschmolzen wird.

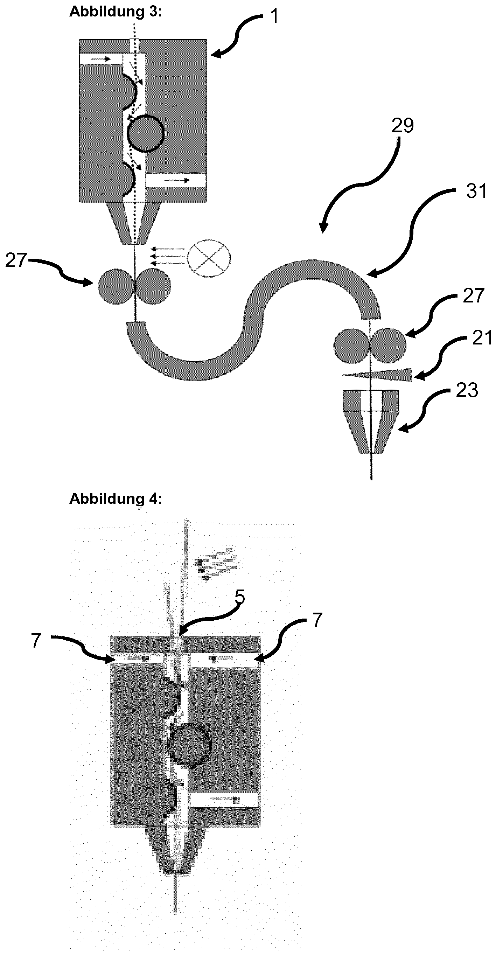

**Figur 3** zeigt zusätzlich zu Figur 2 noch einen Bowdensystem **29** mit einem Bowdenschlauch **31,** welcher zwischen zwei Abzugseinheiten **27** zum Transport des abgekühlten Faserverbundwerkstoffes durch den Schlauch **31** angeordnet ist. Es kann somit eine sehr leichte und mobile Druckeinheit in Form einer Düse **23** (Hotend) und einem Schneidwerkzeug **21** bereitgestellt werden, welche sich unabhängig von der Infiltrationseinheit **1** bewegen kann.

**Figur 4** zeigt einen Druckkopf mit jeweils zwei Zuführungen für das Polymer **7** und eine **5** für die bevorzugt mehreren Faserrovings, wobei hier auch mehrere Öffnungen für die Faserrovings bevorzugt möglich sind. So können verschiedene Materialien gleichzeitig und/oder nacheinander zugeführt werden. Die Zuführungen für die Faserrovings werden hier bevorzugt durch dieselbe physische Öffnung vorgenommen.

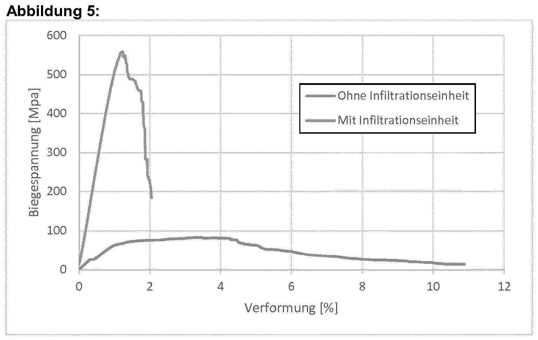

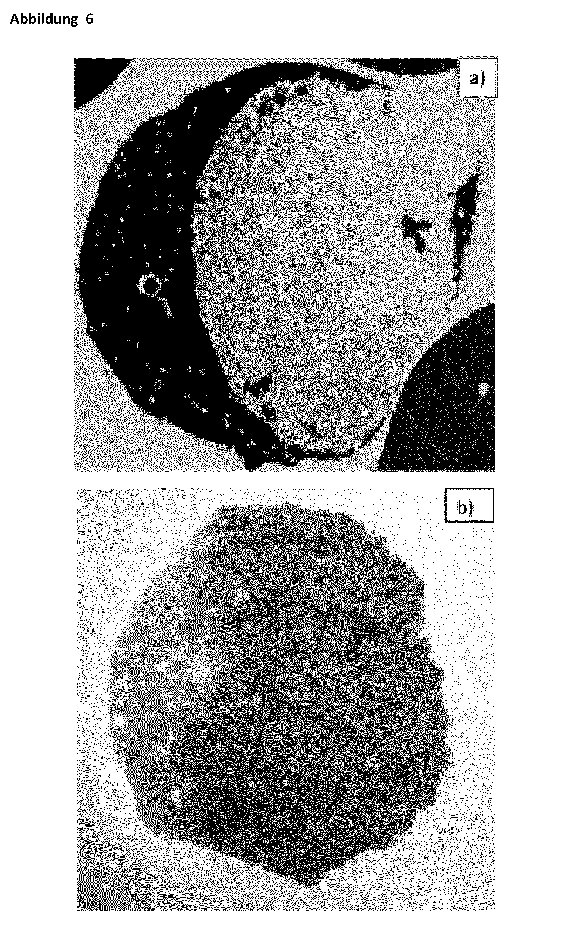

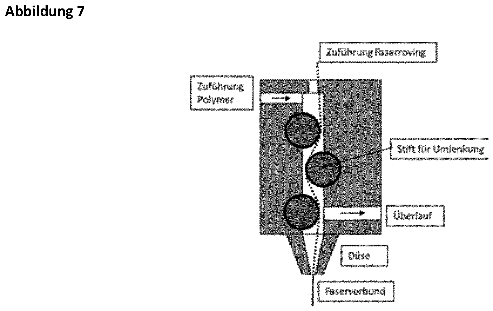

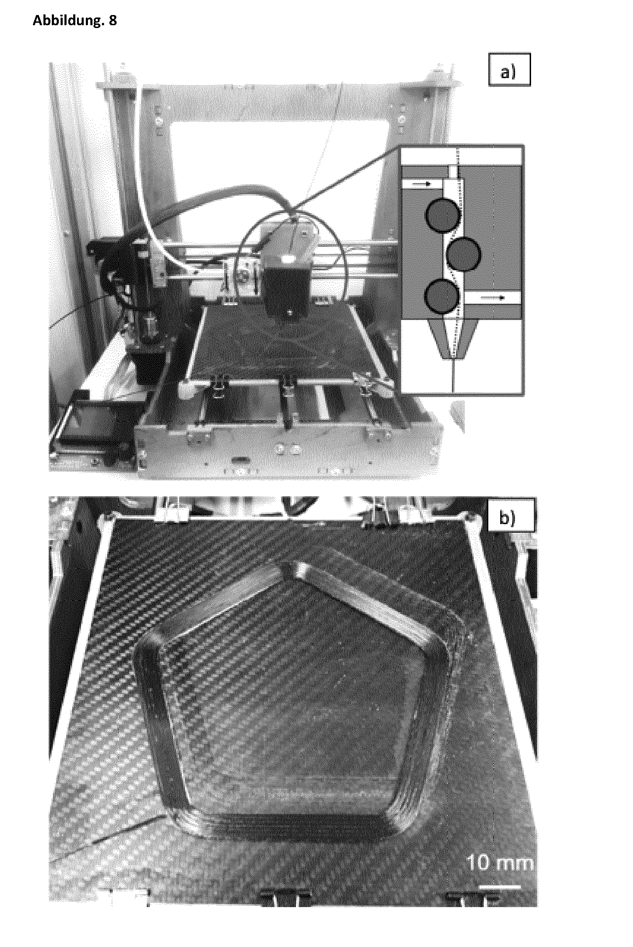

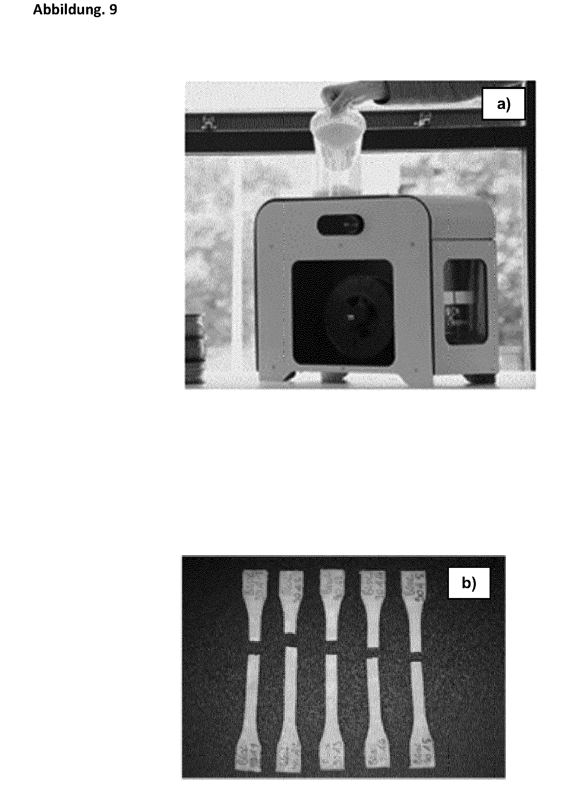

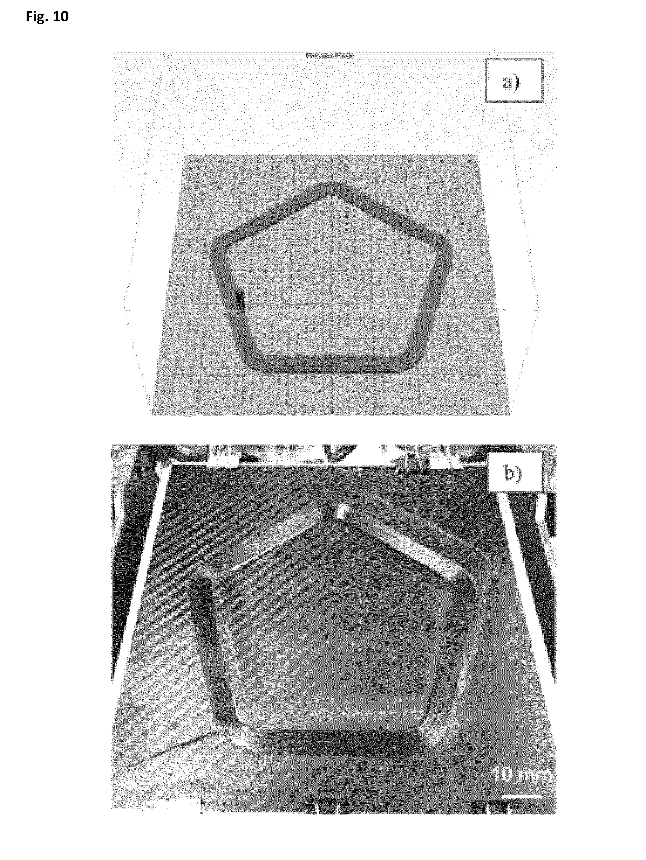

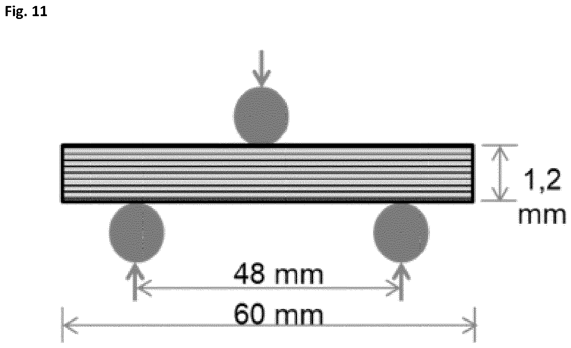

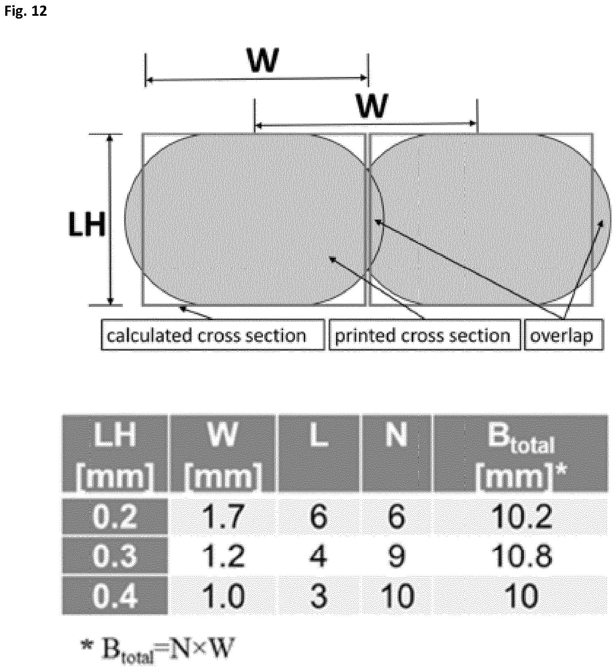

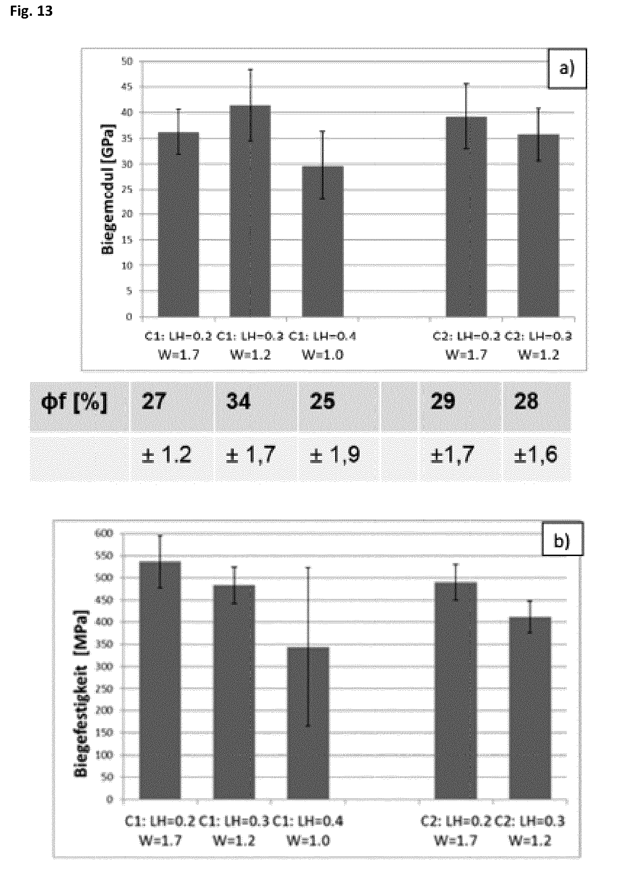

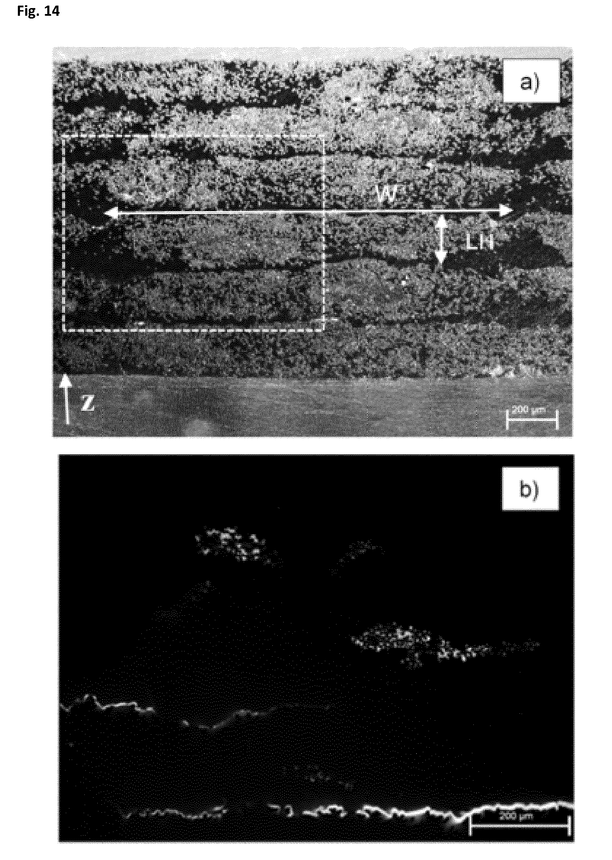

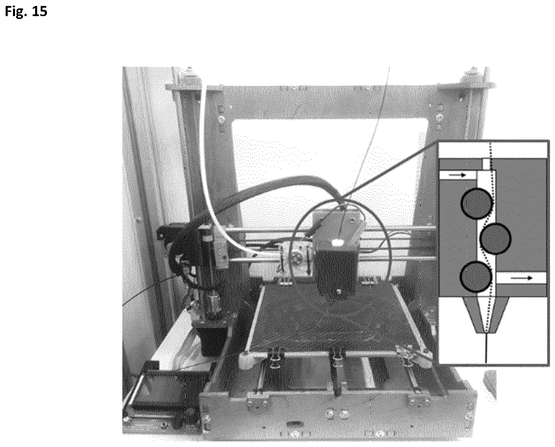

**Figur 5** zeigt ein Biegespannung-Verfomungsdiagramm eines 3-Punkt-Biegeversuchs mit gedruckter Verbundwerkstoffprobe eines Druckkopfes ohne Infiltrationseinheit. Mit einem Druckkopf des Standes der Technik, der keine Umlenkung über Stifte ermöglicht, wurden vorerst auch mechanische Versuche durchgeführt. Bei der Zugbelastung von hergestellten Strängen wurde erkannt, dass der polymere Mantel bei Belastung aufreißt und die Fasern ausgezogen werden. Die ermittelten Festigkeiten des Verbundwerkstoffes sind unterhalb des reinen Matrixmaterials. Neben den Zugversuchen wurden auch 3-Punkt-Biegeversuche durchgeführt. Anhand einer Schliffbildanalyse wurde ebenfalls festgestellt, dass nur eine Ummantelung möglich war und somit ein Einpressen des Materials über die Düse nicht möglich ist. Die mechanischen Eigenschaften des Verbundes ergeben sich durch die fehlende Übertragung der Kräfte zwischen den Fasern, was niedrige Biegefestigkeiten von <100 MPa und hohe plastischen Dehnung > 5 % zur Folge hat. In dem Biegespannung-Verformungsdiagramm ist die hohe plastische Dehnung erkennbar; bei Faserverbundwerkstoffen ist diese typisch um 1-3%, siehe Abb. 5.

### Abbildung 6:

### Aufbau des Druckkopfes

Stand der Technik: Publikationen mit Schmelzinfiltration werden Faserrovings nur ummanteln.

Forschungsziel: Entwicklung eines Druckkopfes mit Infiltrationseffekt.

Verbesserte Infiltration durch:
- Aufweitung des Faserrovings → Kleinere Infiltrationsdistanz
- Druckfeld an den Stiften → Einpressen der Polymerschmelze
   6 a) Ummantelter Roving
   6 b) Infiltrierter Roving

### Abbildung 7:

Druckkopf mit Infiltrationseinheit

### Abbildung 8:

Druckkonfiguration und Materialien
Open-Source Drucksystem für Maschinen/ Firmware Anpassung
Druckkopfdesign offen für andere Faser (Art, Garnstärke) und Matrixmaterialien (Thermoplaste)
8a) Druckkonfiguration: graber I3/ toolson MK2 Druckteilen (Druckfläche 200 x 200 x 100 mm³)
8b) Kohlenstofffasern: Torayca T300 & Tenax HTA40; Matrixpolymer: PA6 Filament (selbst extrudiert)

### Abbildung 9:

Extrusion des PA6 Filaments
9a) Filament extruder Next Advance 3devo
Prozessschritte:
   - Trocknen des PA6 Granulats (70°C für 16h)
   - Filament Extrusion und Aufwickeln
   - Kontrolle des Durchmessers mit 3mm Lehre
9b) Mechanische Analyse:
   Zugversuch nach DIN EN ISO 527-2; Probenkörper: 1BA
   Zugfestigkeit 0° = 68 MPa
   Zugfestigkeit 90° = 57 MPa
   Zugfestigkeit Z = 45 MPa

### Abbildung 10:

10a)/ 10b) Slicer: Simplify 3d v4.01; Slicerparameter: T_{hotend} = 295°C, T_{bed} =60°C, Kühlung aus, Obere-Untere-Schicht 0, Füllung 1000%, Druckgeschwindigkeit 5mm/s, Geschwindigkeit der ersten Schicht 50%.

### Abbildung 11:

3-Punkt-Biegeversuch nach
DIN EN ISO 14125:
   - 5 Probenkörper
   - Faser in Belastungsrichtung

### Abbildung 12:

Einfluss der Schichthöhe LH und Breite W
- Schichthöhe LH beeinflusst die optische Auflösung des FDM Drucks und der Aufbaurate
- Im Multimaterialdruck muss die Schichthöhe des Verbundes und Thermoplast gleich sein
- Probengeometrie abhängig von Lagenanzahl L und Anzahl der Bahnen pro Lage N

### Abbildung 13:

Ergebnis des 3-Punkt-Biegeversuchs
Korrelation zwischen Faservolumengehalt und Biegemodul
Höhere Biegefestigkeit bei kleinerer Lagenhöhe

### Abbildung 14:

Präparation: Einbettmittel mit UV Additiv, Schliffbild nahe Bruchfläche Lichtmikroskop Leica DM4000 M: 14a) Dunkelfeldmodus mit Normallicht 14b) Fluoreszenzmodus mit UV-Licht

### Abbildung 15:

### s. Abbildung 8a)

Am Fachgebiet Keramische Werkstoffe der Technischen Universität Berlin wurde ein neuartiges Verfahren zur Additiven Fertigung von Verbundwerkstoffen mit endlosen Kohlenstofffasern untersucht. Hierbei wurde ein neues Druckkopfdesign erforscht, welches die Kohlenstofffasern im Druckkopf mit einer PA6 Schmelze infiltriert. Untersuchungen ergaben Biegefestigkeiten von bis zu 550 MPa, einem Biegemodul von ca. 40 GPa und einem Faservolumengehalt von 30-35%. Die Additive Fertigung bietet große Vorteile für die automatisierte Herstellung von Faserverbundwerkstoffen. So wird das Bauteil ohne Werkzeug mit Stützstrukturen auf einer Druckplattform aufgebaut. Durch weitere Druckköpfe ist ein Multimaterialansatz möglich, wobei die Faserverstärkung vor allem dort eingesetzt wird wo hohe Festigkeiten nötig sind. Die Nachhaltigkeit ist sehr hoch, da kein Verschnitt beim Einsatz von Kohlenstofffasern auftritt wie es z.B. bei der Verarbeitung von Organoblechen üblich ist.

### BEZUGSZEICHENLISTE

- 1: Infiltrationseinheit
- 3: Überlauf
- 5: Zuführung für das Faserroving
- 7: Zuführung für das Polymer
- 9: Kanal
- 11: Abführung
- 13: Düse
- 15: Umlenkelement
- 17: Zylinderförmiger Stift
- 19: Mitte des Kanals
- 21: Schneideeinheit
- 23: Zweite Düse
- 25: Kühlelement
- 27: Abzugseinheit
- 29: Bowdensystem
- 31: Bowdenschlauch

## Patentansprüche

1. Druckkopf zur additiven Fertigung eines Faserverbundwerkstoffes umfassend eine Faserverstärkung in einer Polymermatrix, umfassend:
- eine Infiltrationseinheit (1) für eine Mischung und/oder Infiltration eines Faserrovings mit einem geschmolzenen Polymer;
- mindestens eine Zuführung für ein Polymer (7) und/oder einen Faserroving (5) zur Infiltrationseinheit (1);
- ein Heizelement zum zumindest teilweisen Schmelzen des Polymers innerhalb der Infiltrationseinheit (1);
- mindestens ein Umlenkelement (15) innerhalb der Infiltrationseinheit (1) sowie
- eine Abführung (11) der Infiltrationseinheit für den entstandenen Faserverbundwerkstoff aus der Infiltrationseinheit (1),
wobei
das geschmolzene Polymer und der Faserroving innerhalb der Infiltrationseinheit (1) entlang eines Kanals (9) zwischen Zuführung (7) und Abführung (11) leitbar sind und der Faserroving innerhalb des Kanals (9) durch das Umlenkelement (15) bereichsweise quer und/oder schräg zu einer geradlinigen Führung zwischen Zuführung (5) und Abführung (11) umlenkbar ist,
**dadurch gekennzeichnet, dass** die Infiltrationseinheit (1) mindestens einen Materialüberlauf (3) für das Polymer aufweist.

2. Druckkopf nach dem vorherigen Anspruch,
**dadurch gekennzeichnet, dass**
das geschmolzene Polymer innerhalb der Infiltrationseinheit mit einer Polymerströmungsrichtung von der Zuführung zur Abführung entlang eines Kanals zwischen Zuführung und Abführung leitbar ist und der Faserroving innerhalb des Kanals durch Umlenkung um das Umlenkelement bereichsweise quer zur Polymerströmungsrichtung von der Zuführung zur Abführung führbar ist,
wobei bevorzugt eine Düse (13) zur kontrollierten Ablage des Faserverbundwerkstoffes auf einer Druckfläche umfasst ist, wobei sich die Düse (13) an der Abführung befindet und wobei Düse (13) und Druckfläche vorzugsweise konfiguriert sind für eine Relativbewegung zwischen Düse (13) und Druckfläche, insbesondere in alle Raumrichtungen und/oder mit allen möglichen Freiheitsgraden,
wobei besonders bevorzugt der Druckkopf mindestens zwei, bevorzugt mindestens drei, stärker bevorzugt mindestens vier und insbesondere mindestens fünf Umlenkelemente (15) umfasst,
wobei ganz besonders bevorzugt 2 - 8 Umlenkelemente (15), insbesondere 5 Umlenkelemente (15) umfasst sind.

3. Druckkopf nach einem oder mehreren der vorherigen Ansprüche,
**dadurch gekennzeichnet, dass**
die Anordnung und/oder eine radiale Ausdehnung des Umlenkelements (15) konfiguriert ist für die Umlenkung des Faserrovings um das Umlenkelement (15), eine Geschwindigkeitsänderung des Faserrovings, eine Aufweitung des Faserrovings und/oder die Führung des Faserrovings quer und/oder schräg zur Polymerströmungsrichtung und/oder zur geradlinigen Führung zwischen Zuführung (5) und Abführung (11),
wobei bevorzugt das Umlenkelement (15) mindestens bereichsweise zylinderförmig ist und eine axiale Anordnung senkrecht zur Polymerströmungsrichtung und/oder zur geradlinigen Führung zwischen Zuführung (5) und Abführung (11) innerhalb des Kanals (9) aufweist, wobei besonders bevorzugt das Umlenkelement (15) von mindestens einer abgerundeten Kante und/oder eines Stiftes (17) innerhalb des Kanals (9) umfasst ist,
wobei ganz besonders bevorzugt das Umlenkelement (15) eine Krümmung quer zur Polymerströmungsrichtung und/oder zur geradlinigen Führung zwischen Zuführung (5) und Abführung (11) aufweist, welche wenigstens bereichsweise durch einen Radius beschreibbar ist, wobei der Radius vorzugsweise zwischen 1-20 mm, stärker bevorzugt zwischen 2-5 mm und insbesondere 4 mm beträgt,
wobei ganz stark bevorzugt das Umlenkelement (15), insbesondere die abgerundete Kante und/oder der abgerundete Stift (17) so positioniert sind, dass es die Mitte des Kanals (19), vorzugsweise in Längsrichtung, überschreitet.

4. Druckkopf nach einem oder mehreren der vorherigen Ansprüche,
**dadurch gekennzeichnet, dass**
eine Aufschmelzung des Polymers vor der Zuführung (7) vorgenommen wird.

5. Druckkopf nach einem oder mehreren der vorherigen Ansprüche,
**dadurch gekennzeichnet, dass**
das Heizelement konfiguriert ist für eine zumindest bereichsweise Aufheizung des Polymers und/oder des Faserrovings auf eine Temperatur oberhalb der Schmelztemperatur des Polymers.

6. Druckkopf nach dem vorherigen Anspruch,
**dadurch gekennzeichnet, dass**
der Materialüberlauf (3) konfiguriert ist für ein Abführen des Polymers in und/oder entgegengesetzt der Faserbewegungsrichtung.

7. Druckkopf nach einem oder mehreren der vorherigen Ansprüche,
**dadurch gekennzeichnet, dass**
das Polymer zugeführt wird in Form eines Granulats und/oder Filaments.

8. Druckkopf nach dem vorherigen Anspruch,
**dadurch gekennzeichnet, dass**
das Filament direkt und/oder durch einen Bowden-Extruder zugeführt wird.

9. Druckkopf nach Anspruch 7,
**dadurch gekennzeichnet, dass**
das Granulat durch einen Schneckenextruder zugeführt wird.

10. Druckkopf nach einem oder mehreren der vorherigen Ansprüche,
umfassend eine Materialfördereinheit (27) nach der Infiltrationseinheit (1), welche konfiguriert ist für einen Transport des Faserverbundwerkstoffs in Richtung Düse (13, 23).

11. Druckkopf nach einem oder mehreren der vorherigen Ansprüche,
umfassend ein Schneidwerkzeug (21) für eine Zerschneidung des Faserverbundwerkstoffs, wobei bevorzugt das Schneidwerkzeug (21) vor der Düse (13, 23), zwischen Düse (13, 23) und Infiltrationseinheit (1) angeordnet vorliegt,
wobei besonders bevorzugt das Schneidwerkzeug (21) hinter der Düse (13, 23) angeordnet vorliegt und der Druckkopf vorzugsweise konfiguriert ist für ein Abstandsänderung zwischen Düse (13, 23) und Druckfläche zum Zuschneiden des Faserverbundwerkstoffs durch das Schneidwerkzeug (21).

12. Druckkopf nach einem oder mehreren der vorherigen Ansprüche,
**dadurch gekennzeichnet, dass**
ein Bowdensystem (29) enthalten ist, wobei das Bowdensystem (29) einen Bowdenschlauch (31) zwischen Infiltrationseinheit (1) und Hotend umfasst sowie ein Schneidwerkzeug (21), welches vor dem Bowdenschlauch (31) oder hinter dem Bowdenschlauch (31), vor oder hinter dem Hotend angeordnet vorliegt,
wobei bevorzugt eine Infiltrationseinheit (1) mehrere Zuführungen für das Polymer (7) und/oder den Faserroving (5) umfasst, wobei verschiedene Materialien und/oder Faserrovingstärken zugeführt werden können.

13. Verwendung eines Druckkopfs nach einem oder mehreren der Ansprüche 1-12 für ein additives Verfahren, bevorzugt zur Herstellung von Prepregs und/oder Organoblechen.

14. Verfahren zur additiven Fertigung eines Faserverbundwerkstoffes umfassend eine Faserverstärkung in einer Polymermatrix mit einem Druckkopf nach einem oder mehreren der Ansprüche 1-12, umfassend die folgenden Schritte:
- Zuführen des Polymers und des Faserrovings zur Infiltrationseinheit (1) über die mindestens eine Zuführung (5, 7);
- Heizen der Infiltrationseinheit (1) durch das Heizelement;
- Leiten des durch Erhitzen geschmolzenen Polymers innerhalb des Infiltrationseinheit (1) entlang eines Kanals (9) zwischen Zuführung (5, 7) und Abführung (11), bevorzugt mit der Polymerströmungsrichtung von der Zuführung (5, 7) zur Abführung (11);
- Leiten des Faserrovings entlang des Kanals (9) über das Umlenkelement (15), wobei das Faserroving eine Geschwindigkeitsänderung erfährt, bereichsweise quer und/oder schräg zur Polymerströmungsrichtung von der Zuführung (7) zur Abführung und/oder zur geradlinigen Führung zwischen Zuführung (5) und Abführung (11) geführt wird und/oder aufgeweitet wird.

## Claims

1. Printhead for the additive manufacturing of a fibre reinforced material, comprising fibre reinforcement in a polymer matrix, comprising:
- an infiltration unit (1) for mixing and/or infiltrating a fibre roving with a molten polymer;
- at least one feeder for a polymer (7) and/or a fibre roving (5) to the infiltration unit (1);
- a heating element, for at least partial melting of the polymer within the infiltration unit (1);
- at least one deflecting element (15) within the infiltration unit (1); and
- an outlet (11) of the infiltration unit for the resulting fibre reinforced material from the infiltration unit (1),
wherein the molten polymer and the fibre roving can be guided within the infiltration unit (1) along a channel (9) between the feeder (7) and the outlet (11), and the fibre roving can be deflected within the channel (9) by the deflecting element (15), area by area, transversely and/or obliquely to a straight-line movement between the feeder (5) and the outlet (11),
**characterized in that**
the infiltration unit (1) has at least one material overflow (3) for the polymer.

2. Printhead according to the preceding claim,
**characterized in that**
the molten polymer can be guided within the infiltration unit with a polymer flow direction, from the feeder to the outlet, along a channel between the feeder and the outlet, and the fibre roving can be guided within the channel, by means of deflection, around the deflecting element, area by area, transversely to the polymer flow direction, from the feeder to the outlet,
wherein preferably a nozzle (13) for the controlled placement of the fibre reinforced material on a printing surface is comprised, wherein the nozzle (13) is located at the outlet and wherein the nozzle (13) and the printing surface are preferably configured for a relative movement between the nozzle (13) and the printing surface, in particular in all spatial directions and/or with all possible degrees of freedom,
wherein particularly preferred the printhead comprises at least two, preferably at least three, more preferably at least four, and, in particular, at least five deflecting elements (15),
wherein very particularly preferred 2 - 8 deflecting elements (15), in particular 5 deflecting elements (15) are included.

3. Printhead according to one or more of the preceding claims,
**characterized in that**
the layout and/or a radial extension of the deflecting element (15) is configured for the deflection of the fibre roving around the deflecting element (15), a change in speed of the fibre roving, an expansion of the fibre roving and/or the guiding of the fibre roving transversely and/or obliquely to the polymer flow direction and/or for the straight-line movement between the feeder (5) and the outlet (11),
wherein preferably the deflecting element (15) is cylindrical, at least area by area, and has an axial layout perpendicular to the polymer flow direction and/or to the rectilinear guide between feeder (5) and outlet (11) within the channel (9),
wherein particularly preferred the deflecting element (15) comprises at least one rounded edge and/or pin (17) within the channel (9),
wherein very particularly preferred the deflecting element (15) has a bending transverse to the polymer flow direction and/or to the straight-line movement between the feeder (5) and the outlet (11), which can be described at least area by area, by a radius, the radius preferably being between 1-20 mm, more preferably between 2-5 mm, and, in particular, 4 mm,
wherein very strongly preferred the deflecting element (15), in particular, the rounded edge and/or the rounded pin (17) are positioned in such a manner that it crosses the centre of the channel (19), preferably in the longitudinal direction.

4. Printhead according to one or more of the preceding claims,
**characterized in that**
a melting of the polymer is carried out before the feeding (7).

5. Printhead according to one or more of the preceding claims,
**characterized in that**
the heating element is configured at least for an area by area heating of the polymer and/or the fibre roving to a temperature above the melting temperature of the polymer.

6. Printhead according to the preceding claim,
**characterized in that**
the material overflow (3) is configured for discharging the polymer in and/or opposite to the direction of fibre movement.

7. Printhead according to one or more of the preceding claims,
**characterized in that**
the polymer is fed in the form of granulates and/or filaments.

8. Printhead according to the preceding claim,
**characterized in that**
the filament is fed directly and/or through a Bowden extruder.

9. Printhead according to claim 7,
**characterized in that**
the granulate is fed through a screw extruder.

10. Printhead according to one or more of the preceding claims,
comprising a material conveying unit (27) after the infiltration unit (1), configured for conveying the fibre reinforced material towards the nozzle (13, 23).

11. Printhead according to one or more of the preceding claims,
comprising a cutting tool (21) for cutting the fibre reinforced material,
wherein preferably the cutting tool (21) is disposed in front of the nozzle (13, 23), between the nozzle (13, 23) and the infiltration unit (1) the cutting tool (21) is disposed behind the nozzle (13, 23) and the printhead is preferably configured for a distance change between the nozzle (13, 23) and the printing surface for cutting the fibre reinforced material by the cutting tool (21).

12. Printhead according to one or more of the preceding claims,
**characterized in that**
a Bowden system (29) is included, whereby the Bowden system (29), comprises a Bowden tube (31) between the infiltration unit (1) and the hotend, and a cutting tool (21), which is disposed in front of the Bowden tube (31) or behind the Bowden tube (31), in front of or behind the hotend,
wherein preferably an infiltration unit (1) comprises several feeders for the polymer (7) and/or the fibre roving (5), whereby different materials and/or fibre roving strengths can be fed.

13. Use of a printhead according to one or more of claims 1-12 for an additive process, preferably for the production of pre-pregs and/or organic sheets.

14. A process for additively manufacturing a fibre reinforced material, comprising a fibre reinforcement in a polymer matrix with a printhead, according to one or more of claims 1-12, comprising the following steps:
- Feeding the polymer and the fibre roving to the infiltration unit (1) via at least one feeder (5, 7);
- Heating the infiltration unit (1) by the heating element;
- Guiding the polymer melted by heating inside the infiltration unit (1) along a channel (9) between the feeder (5, 7) and the outlet (11), preferably with the polymer flow direction from the feeder (5, 7) to the outlet (11);
- Guiding the fibre roving along the channel (9) via the deflecting element (15), the fibre roving undergoing a change in speed, being guided and/or widened, area by area, transversely and/or obliquely to the polymer flow direction from the feeder (7) to the outlet and/or being guided in a straight-line movement between the feeder (5) and the outlet (11).

## Revendications

1. Tête d'impression pour la fabrication additive d'un matériau composite fibreux comprenant un renfort fibreux dans une matrice polymère, comprenant :
- une unité d'infiltration (1) pour mélanger et/ou infiltrer une mèche de fibres avec un polymère fondu ;
- au moins une alimentation pour un polymère (7) et/ou une mèche de fibres (5) vers l'unité d'infiltration (1) ;
- un élément chauffant pour faire fondre au moins partiellement le polymère à l'intérieur de l'unité d'infiltration (1) ;
- au moins un élément de déviation (15) à l'intérieur de l'unité d'infiltration (1) et
- une évacuation (11) de l'unité d'infiltration pour faire sortir le matériau composite fibreux résultant de l'unité d'infiltration (1),
dans laquelle
le polymère fondu et la mèche de fibres peuvent être guidés à l'intérieur de l'unité d'infiltration (1) le long d'un canal (9) entre l'alimentation (7) et l'évacuation (11), et la mèche de fibres peut être déviée à l'intérieur du canal (9) via l'élément de déviation (15) dans certaines zones transversalement et/ou obliquement par rapport à un guidage en ligne droite entre l'alimentation (5) et l'évacuation (11), **caractérisée en ce que**
l'unité d'infiltration (1) présente au moins un trop-plein de matériau (3) pour le polymère.

2. Tête d'impression selon la revendication précédente,
**caractérisée en ce que**
le polymère fondu à l'intérieur de l'unité d'infiltration peut être guidé dans une direction d'écoulement du polymère de l'alimentation à l'évacuation le long d'un canal entre l'alimentation et l'évacuation et la mèche de fibres peut être guidée à l'intérieur du canal de l'alimentation à l'évacuation dans certaines zones transversalement à la direction d'écoulement du polymère par déviation autour de l'élément de déviation,
dans laquelle, de préférence, une buse (13) pour le placement contrôlé du matériau composite fibreux sur une surface d'impression est comprise, dans laquelle la buse (13) est située sur l'évacuation et dans laquelle la buse (13) et la surface d'impression sont de préférence configurées pour un déplacement relatif entre la buse (13) et la surface d'impression, en particulier dans toutes les directions spatiales et/ou avec tous les degrés de liberté possibles,
dans laquelle la tête d'impression comprend de manière particulièrement préférée au moins deux, de préférence au moins trois, de manière davantage préférée au moins quatre et en particulier au moins cinq éléments de déviation (15),
dans laquelle de manière tout particulièrement préférée, 2 à 8 éléments de déviation (15), en particulier 5 éléments de déviation (15), sont inclus.

3. Tête d'impression selon une ou plusieurs des revendications précédentes,
**caractérisée en ce que**
la disposition et/ou une étendue radiale de l'élément de déviation (15) sont configurés pour la déviation de la mèche de fibres autour de l'élément de déviation (15), une modification de la vitesse de la mèche de fibres, une extension de la mèche de fibres et/ou le guidage de la mèche de fibres transversalement et/ou obliquement par rapport au sens d'écoulement du polymère et/ou au guidage en ligne droite entre l'alimentation (5) et l'évacuation (11),
dans laquelle l'élément de déviation (15) est de préférence cylindrique dans au moins certaines zones et présente une disposition axiale perpendiculaire à la direction d'écoulement du polymère et/ou au guidage en ligne droite entre l'alimentation (5) et l'évacuation (11) à l'intérieur du canal (9),
dans laquelle de manière particulièrement préférée, l'élément de déviation (15) est entouré d'au moins un bord arrondi et/ou d'une tige (17) à l'intérieur du canal (9),
dans laquelle l'élément de déviation (15) présente de manière tout particulièrement préférée une courbure transversale à la direction d'écoulement du polymère et/ou au guidage en ligne droite entre l'alimentation (5) et l'évacuation (11), qui peut être décrite au moins dans certaines zones par un rayon, dans laquelle le rayon est de préférence compris entre 1 et 20 mm, de manière davantage préférée entre 2 et 5 mm et en particulier est égal à 4 mm,
dans laquelle de manière tout particulièrement préférée, l'élément de déviation (15), en particulier le bord arrondi et/ou la tige arrondie (17), sont positionnés de manière à dépasser du centre du canal (19), de préférence dans le sens longitudinal.

4. Tête d'impression selon une ou plusieurs des revendications précédentes,
**caractérisée en ce que**
le polymère est fondu avant alimentation (7).

5. Tête d'impression selon une ou plusieurs des revendications précédentes,
**caractérisée en ce que**
l'élément chauffant est configuré pour chauffer au moins partiellement le polymère et/ou la mèche de fibres à une température supérieure à la température de fusion du polymère.

6. Tête d'impression selon la revendication précédente,
**caractérisée en ce que**
le trop-plein de matériau (3) est configuré pour évacuer le polymère dans et/ou
à l'opposé de la direction de déplacement des fibres.

7. Tête d'impression selon une ou plusieurs des revendications précédentes,
**caractérisée en ce que**
le polymère est alimenté sous forme d'un granulé et/ou d'un filament.

8. Tête d'impression selon la revendication précédente,
**caractérisée en ce que**
le filament est alimenté directement et/ou via une extrudeuse Bowden.

9. Tête d'impression selon la revendication 7,
**caractérisée en ce que**
le granulé est alimenté via une extrudeuse à vis.

10. Tête d'impression selon une ou plusieurs des revendications précédentes,
comprenant une unité de transport de matériau (27) après l'unité d'infiltration (1), qui est configurée pour transporter le matériau composite fibreux en direction de la buse (13, 23).

11. Tête d'impression selon une ou plusieurs des revendications précédentes,
comprenant un outil de coupe (21) pour couper le matériau composite fibreux, dans laquelle l'outil de coupe (21) est de préférence disposé en amont de la buse (13, 23), entre la buse (13, 23) et l'unité d'infiltration (1),
dans laquelle de manière particulièrement préférée, l'outil de coupe (21) est disposé en aval de la buse (13, 23) et la tête d'impression est de préférence configurée pour modifier la distance entre la buse (13, 23) et la surface d'impression pour la coupe du matériau composite fibreux par l'outil de coupe (21).

12. Tête d'impression selon une ou plusieurs des revendications précédentes,
**caractérisée en ce**
**qu'**un système Bowden (29) est inclus, dans laquelle le système Bowden (29) comprend un tuyau Bowden (31) entre l'unité d'infiltration (1) et l'extrémité chaude et un outil de coupe (21) qui est disposé en amont du tuyau Bowden (31) ou en aval du tuyau Bowden (31), en amont ou en aval de l'extrémité chaude,
dans laquelle une unité d'infiltration (1) comprend de préférence plusieurs alimentations pour le polymère (7) et/ou la mèche de fibres (5), dans laquelle différents matériaux et/ou épaisseurs de mèche de fibres peuvent être alimentés.

13. Utilisation d'une tête d'impression selon une ou plusieurs des revendications 1 à 12 pour un procédé additif, de préférence pour la fabrication de préimprégnés et/ou de feuilles organiques.

14. Procédé de fabrication additive d'un matériau composite fibreux comprenant un renfort fibreux dans une matrice polymère avec une tête d'impression selon une ou plusieurs des revendications 1 à 12, comprenant les étapes suivantes :
- alimentation de l'unité d'infiltration (1) avec le polymère et la mèche de fibres via l'au moins une alimentation (5, 7) ;
- chauffage de l'unité d'infiltration (1) par l'élément chauffant ;
- guidage du polymère fondu par chauffage à l'intérieur de l'unité d'infiltration (1) le long d'un canal (9) entre l'alimentation (5, 7) et l'évacuation (11), de préférence dans la direction d'écoulement du polymère de l'alimentation (5, 7) à l'évacuation (11) ;
- guidage de la mèche de fibres le long du canal (9) via l'élément de déviation (15), dans lequel la mèche de fibres subit une modification de la vitesse, est guidée et/ou étendue dans certaines zones transversalement et/ou obliquement par rapport à la direction d'écoulement du polymère de l'alimentation (7) à l'évacuation et/ou au guidage en ligne droite entre l'alimentation (5) et l'évacuation (11).
